(19) Europäisches Patentamt
European Patent Office
Office européen des brevets

(11) Veröffentlichungsnummer: **0 318 759 B1**

(12) **EUROPÄISCHE PATENTSCHRIFT**

(45) Veröffentlichungstag der Patentschrift: **27.01.93**

(51) Int. Cl.$^5$: **G03G 5/06**, C09B 57/04

(21) Anmeldenummer: **88119085.4**

(22) Anmeldetag: **17.11.88**

# (54) Mehrschichtiges elektrophotographisches Aufzeichnungsmaterial.

(30) Priorität: **28.11.87 DE 3740420**

(43) Veröffentlichungstag der Anmeldung:
**07.06.89 Patentblatt 89/23**

(45) Bekanntmachung des Hinweises auf die Patenterteilung:
**27.01.93 Patentblatt 93/04**

(84) Benannte Vertragsstaaten:
**BE CH DE ES FR GB IT LI NL SE**

(56) Entgegenhaltungen:
**EP-A- 0 017 132**
**EP-A- 0 061 094**

(73) Patentinhaber: **BASF Aktiengesellschaft**
**Carl-Bosch-Strasse 38**
**W-6700 Ludwigshafen(DE)**

(72) Erfinder: **Leyrer, Reinhold J., Dr.**
**Menzelstrasse 4**
**W-6700 Ludwigshafen(DE)**
Erfinder: **Neumann, Peter, Dr.**
**Poststrasse 28**
**W-6800 Mannheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung richtet sich auf ein neues, mehrschichtiges elektrophotographisches Aufzeichnungsmaterial mit

(A) einem elektrisch leitenden Träger und mit
(B) einer oder mehreren Schicht(en) aus
($b_1$) einem oder mehreren Bindemittel(n),
($b_2$) einer oder mehreren Ladungsträger erzeugenden Verbindung(en) oder Sensibilisatoren,
($b_3$) einer oder mehreren Ladungsträger transportierenden Verbindung(en) oder Photoleitern und ggf.
($b_4$) Zusatzstoffen.

Außerdem betrifft die Erfindung neue Isoindoleninfarbstoffe.

Bekanntermaßen kann ein solches mehrschichtiges, elektrophotographisches Aufzeichnungsmaterial außer dem Träger (A) und der oder den Schicht(en) (B) noch weitere Schichten enthalten, welche für die Funktion des Aufzeichnungsmaterials dienlich sind. Außerdem können hierin die Ladungsträger erzeugenden Verbindungen oder Sensibilisatoren ($b_2$) als separate Schicht oder in einer separaten Schicht neben einer Schicht aus Bindemitteln ($b_1$), Ladungsträger transportierenden Verbindungen ($b_3$) und gegebenenfalls Zusatzstoffen ($b_4$) vorliegen, wobei dann diese Doppelschicht insgesamt als Schicht (B) anzusehen ist. Schichten (B) dieser Art werden ebenso wie diejenigen, die alle Komponenten ($b_1$), ($b_2$), ($b_3$) und gegebenenfalls ($b_4$) zusammen enthalten, im folgenden ihrer Funktion gemäß kurz als "photoleitende Schicht (B)" bezeichnet.

Mehrschichtige, elektrophotographische Aufzeichnungsmaterialien, welche einen elektrisch leitenden Träger (A) und photoleitende Schichten (B) aufweisen, sind beispielsweise aus der EP-A-01 31 215, der EP-P-00 31 481, EP-A-01 50 419, EP-A-01 62 216, der EP-A-01 56 308, der EP-A-01 31 292, der EP-A-01 52 889 oder der EP-A-01 98 488 bekannt. Diese Aufzeichnungsmaterialien dienen der Herstellung von elektrophotographischen Offsetdruckplatten oder gedruckten Schaltungen (Leiterplatten) oder sie werden für die Photokopiertechnik verwendet.

Hierzu wird die photoleitende Schicht (B) des Aufzeichnungsmaterials, z.B. mittels einer Coronaentladung elektrisch positiv oder negativ aufgeladen. Hiernach wird die elektrisch aufgeladene Schicht (B) mit aktinischem Licht bildmäßig belichtet, wobei je nach verwendetem Sensibilisator ($b_2$) ultraviolettes, sichtbares oder infrarotes Licht in Betracht kommt. Durch die Belichtung wird die photoleitende Schicht (B) in ihren belichteten Bereichen elektrisch leitend, so daß die zuvor erzeugte elektrostatische Aufladung in diesen Bereichen über den elektrisch leitenden Träger (A) abfließen kann. Hierdurch wird ein latentes elektrostatisches Bild auf dem Aufzeichnungsmaterial erzeugt, welches mit Hilfe geeigneter flüssiger oder fester Toner zu einem sichtbaren Bild entwickelt werden kann. Diese Technik der bildmäßigen Informationsaufzeichnung wird allgemein auch als Xerographie bezeichnet, wobei der dem Aufzeichnungsverfahren zugrundeliegende physikalische Prozess unter dem Namen "Carlson-Prozess" bekannt ist.

Nach dem Tonen des elektrostatischen Bildes kann ein solches Aufzeichnungsmaterial in unterschiedlicher Weise weiterverarbeitet werden. Beispielsweise kann das Tonerbild von dem Aufzeichnungsmaterial auf einen anderen Träger wie etwa Papier übertragen und dort fixiert werden, wodurch man eine positive Photokopie der ursprünglichen Bildvorlage erhält. Dieser Vorgang kann je nach Lebensdauer des Aufzeichnungsmaterials mehr oder weniger oft durchgeführt werden. Für die Herstellung elektrophotographischer Offsetdruckplatten wird dagegen das Tonerbild auf der photoleitfähigen Schicht (B) selbst durch Erhitzen fixiert. Hiernach werden die unbelichteten und daher tonerfreien Bereiche der photoleitenden Schicht (B) mit Hilfe geeigneter flüssiger Medien, welche man auch als Entwicklerlösungsmittel bezeichnet, weggelöst. Eine so hergestellte elektrophotographische Offsetdruckplatte nimmt, ebenso wie eine in konventioneller Weise erzeugte, im allgemeinen an ihren hydrophoben Tonerbildbereichen ölige Druckfarbe und an ihren entschichteten, hydrophilen Bereichen Wasser an, so daß sie für Offset-typische Druckverfahren geeignet ist. Für die Herstellung elektrophotographischer Photoresists wendet man Verfahren an, die dem Herstellverfahren der Offsetdruckplatten im Grunde entsprechen.

Wesentliche Parameter, welche bekanntermaßen die Wiedergabequalität solcher Aufzeichnungsmaterialien und ihrer photoleitfähigen Schichten (B) in der Hauptsache bestimmen, sind eine möglichst niedrige Dunkelleitfähigkeit, eine hohe elektrostatische Aufladbarkeit und eine hohe Empfindlichkeit gegenüber aktinischem Licht, verbunden mit guten elektrokinetischen Eigenschaften, worunter man im allgemeinen einen sehr raschen Spannungsabfall bei der Belichtung auf oder fast auf das ursprüngliche elektrostatische Potential vor der Aufladung versteht. Dieser Spannungsabfall wird auch als photoindizierter Spannungsabfall oder kurz als Photoabfall bezeichnet. All diese Parameter zusammen legen von vornherein fest, ob ein Aufzeichnungsmaterial kontrastreiche, auch in den feinsten Bildelementen vorlagengetreue Tonerbilder in kürzest möglicher Zeit liefert.

Bei der gegenseitigen Abstimmung der wesentlichen Parameter aufeinander und auf die für die bildmäßige Belichtung der photoleitenden Schicht (B) verwendete Quelle des aktinischen Lichts spielen die Ladungsträger erzeugenden Verbindungen oder Sensibilisatoren ($b_2$) eine ganz entscheidende Rolle. Die von jeher schon große Bedeutung der Sensibilisatoren ($b_2$) ist wegen der Weiterentwicklung herkömmlicher Belichtungsquellen und der Neuentwicklung von Laserlichtquellen noch erhöht worden. Die Fortschritte auf diesem Gebiet haben inzwischen zu Belichtungsgeräten geführt, welche die rasche und exakte bildmäßige Belichtung elektrophotographischer Aufzeichnungsmaterialien mit Hilfe computergesteuerter Laser, insbesondere mit Halbleiterlasern, ermöglicht. Damit die Vorteile dieser zukunftsträchtigen Belichtungsmethode in vollem Umfang ausgeschöpft werden können, ist allerdings bei den elektrophotographischen Aufzeichnungsmaterialien ein Eigenschaftsprofil vorauszusetzen, das die herkömmlichen Aufzeichnungsmaterialien nicht oder nicht in der notwendigen Ausprägung bieten. Insbesondere muß wegen der kurzen Laserimpulse die Adsorption der Lichtenergie durch die photoleitende Schicht (B) und der hierdurch hervorgerufene Photoabfall besonders rasch, d.h. im Nanosekundenbereich erfolgen, wobei auch in diesem Zeitintervall das Gesetz

$I \times t$ = konstant (I = Lichtintensität; t = Zeit)

Gültigkeit haben muß.

Diese strengen Anforderungen werden indes durch die bekannten elektrophotographischen Aufzeichnungsmaterialien, welche als Sensibilisatoren einen oder mehrere Farbstoffe aus den Klassen der Triarylmethane, Xanthene, Cyanine, Azofarbstoffe, Phthalocyanine, Isoindoline oder der Perylentetracarbonsäurederivate enthalten, bislang nicht in gewünschtem Umfange erfüllt. Demzufolge müssen die bekannten Aufzeichnungsmaterialien überwiegend noch immer in der herkömmlichen Art und Weise belichtet werden, um überhaupt eine gute Wiedergabequalität zu erzielen, wobei man sich der besonderen Vorteile der Laserbelichtungsmethode begibt. Werden die bekannten, mehrschichtigen, elektrophotographischen Aufzeichnungsmaterialien dennoch der bildmäßigen Belichtung mit Laserlicht unterworfen, so weisen sie Nachteile auf.

So ist beispielsweise ihre Verwendung in wirtschaftlichen, langlebigen und schnell ansprechenden Photokopiergeräten, welche mit Laserbelichtung arbeiten, oder ihre Verwendung für die Herstellung hochwertiger, vorlagengetreuer und auflagestabiler elektrophotographischer Offsetdruckplatten und hochwertiger, vorlagengetreuer und ätzmittelstabiler elektrophotographischer Photoresists nach dem Laserbelichtungsverfahren bislang nicht oder nur in sehr eingeschränktem Umfang möglich. Diese Nachteile schlagen selbstverständlich in vollem Umfang auf die Produkte durch, welche man letztlich mit Hilfe der elektrophotographischen Aufzeichnungsmaterialien erzeugen will: So sind die betreffenden Photokopien oder die Druckerzeugnisse nicht nur in lediglich minderer Qualität, sondern auch nur in vergleichsweise geringer Auflage erhältlich, und elektrische Schaltkreise, welche man unter Verwendung der bekannten elektrophotographischen Resists hergestellt hat, weisen oftmals soviele Wiedergabefehler auf, daß sie den Anforderungen der Praxis nicht mehr genügen.

Aufgabe der vorliegenden Erfindung ist es, neue, mehrschichtige elektrophotographische Aufzeichnungsmaterialien zu finden, welche die Nachteile der bekannten Aufzeichnungsmaterialien nicht mehr länger aufweisen. Vor allem sollen die neuen Aufzeichnungsmaterialien nicht nur bei der bildmäßigen Belichtung mit herkömmlichen Lichtquellen ein vorzügliches reprographisches Eigenschaftsprofil aufweisen, sondern sie sollen auch der bildmäßigen Belichtung mit Laserlicht zugänglich sein und hiernach hervorragende Photokopien, elektrophotographische Offsetdruckplatten und elektrophotographische Photoresists liefern.

Außerdem war es Aufgabe der Erfindung neue Isoindoleninfarbstoffe zu finden, welche sich besonders gut als Sensibilisatoren ($b_2$) eignen.

Demgemäß wurde ein mehrschichtiges elektrophotographisches Aufzeichnungsmaterial mit

(A) einem elektrisch leitenden Träger und mit

(B) einer oder mehreren Schicht(en) aus

($b_1$) einem oder mehreren Bindemittel(n),

($b_2$) einer oder mehreren Ladungsträger erzeugenden Verbindung(en) oder Sensibilisatoren.

($b_3$) einer oder mehreren Ladungsträger transportierenden Verbindung(en) oder Photoleitern und gegebenenfalls

($b_4$) Zusatzstoffen gefunden,

wobei das neue Aufzeichnungsmaterial dadurch gekennzeichnet ist, daß man hierin als Ladungsträger erzeugende Verbindungen oder Sensibilisatoren ($b_2$) Isoindoleninfarbstoffe der allgemeinen Formel I verwendet,

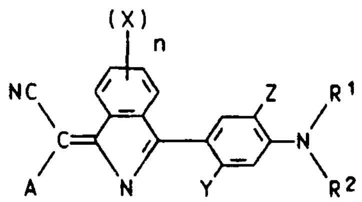

in der der Index und die Variablen die folgende Bedeutung haben:

A — Cyan, Carbo-$C_1$-$C_4$-Alkoxy, Carbamoyl, N-$C_1$-$C_4$-Alkyl-carbamoyl, worin der Alkylrest gegebenenfalls durch $C_1$-$C_4$-Alkoxy substituiert ist, N-Phenylcarbamoyl, worin der Phenylrest gegebenenfalls durch $C_1$-$C_4$-Alkyl oder $C_1$-$C_4$-Alkoxy substituiert ist, Acetyl, Benzoyl, 4-Nitrophenyl oder 4-Cyanphenyl;

X — Wasserstoff, Chlor, $C_1$-$C_4$-Alkyl, $C_1$-$C_4$-Alkoxy, wobei bei n = 2 die Substituenten gleich oder verschieden sein können;

n — 1 oder 2;

$R^1$ — Wasserstoff, Methyl, Ethyl oder 2-Hydroxyethyl und

$R^2$ — Phenyl, durch $C_1$-$C_4$-Alkyl oder $C_1$-$C_4$-Alkoxy substituiertes Phenyl oder Cyclohexyl; oder

$R^1$ — Wasserstoff und

$R^2$ — $C_1$-$C_4$-Alkyl; oder

$R^1$ und $R^2$ — $C_1$-$C_6$-Alkyl; durch Chlor, Cyan, Hydroxy, $C_1$-$C_4$-Alkoxy, Phenoxy, $C_2$-$C_5$-Alkanoyloxy, das gegebenenfalls durch $C_1$-$C_4$-Alkoxy oder Phenoxy substituiert ist, oder durch Carbo-$C_1$-$C_4$-Alkoxy substituiertes $C_1$-$C_4$-Alkyl; Allyl oder Phenyl-$C_1$-$C_4$-Alkyl;
oder die Gruppe

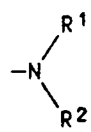

stellt einen gesättigten oder partiell ungesättigten heterocyclischen Fünf- oder Sechsring dar, der noch ein Sauerstoff-oder ein weiteres Stickstoffatom als Ringglied enthalten kann;

Y — Wasserstoff, Hydroxy, Methyl, Ethyl;

Y

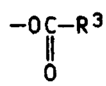

worin $R^3$ für lineares oder verzweigtes $C_1$-$C_{12}$-Alkyl, Phenyl oder durch $C_1$-$C_4$-Alkyl oder $C_1$-$C_4$-Alkoxy substituiertes Phenyl steht;

Y

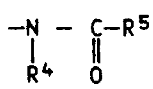

worin $R^4$ für Wasserstoff oder $C_1$-$C_4$-Alkyl steht und $R^5$ die folgende Bedeutung hat: Wasserstoff, lineares oder verzweigtes $C_1$-$C_{12}$-Alkyl, Trifluormethyl, Chlormethyl, $C_1$-$C_4$-Alkoxymethyl, Phenoxymethyl, wobei im Phenoxy gegebenenfalls 1 oder 2 Wasserstoffatome durch Chlor, Methoxy, Nitro oder $C_1$-$C_4$-Alkyl substituiert sind und bei zwei Substituenten diese gleich oder verschieden sein können; Phenylthiomethyl, worin das Phenyl gegebenenfalls durch $C_1$-$C_4$-Alkyl substituiert ist; Benzyl; Phenylethyl; $C_3$-$C_7$-Cycloalkyl; Phenyl, durch $C_1$-$C_{12}$-Alkyl, $C_1$-$C_{12}$-Alkoxy oder Nitro substituiertes Phenyl; $H_5C_6$-$CH=CH$-; -$CH_2$-$PO(OR^6)_2$, worin $R^6$ füf $C_1$-$C_4$-Alkyl steht; oder

Y

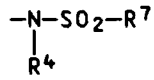

worin $R^4$ die vorstehend genannte Bedeutung hat und $R^7$ für $C_1$-$C_{12}$-Alkyl, Phenyl oder $C_1$-$C_{12}$-Alkylphenyl steht; oder

Y N-$C_1$-$C_4$-Alkylamino, wenn $R^1$ und $R^2$ $C_1$-$C_4$-Alkyl sind; oder

Y N,N-Di-$C_1$-$C_4$-Alkylamino, N-Pyrrolidinyl, N-Piperidinyl oder N-Morpholinyl, wenn

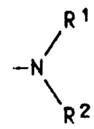

die gleiche Bedeutung hat; und

Z Wasserstoff oder für den Fall, daß $R^1$ und $R^2$ $C_1$-$C_4$-Alkyl, Allyl und Y

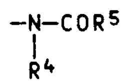

sind, Methoxy oder Ethoxy.

Außerdem wurden neue Isoindoleninfarbstoffe Ia der allgemeinen Formel Ia gefunden,

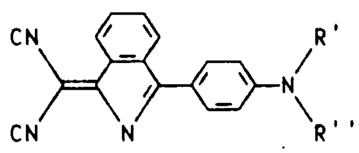

Ia

worin die Gruppe

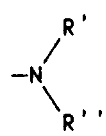

einen partiell ungesättigten heterocyclischen Fünf- oder Sechsring darstellt, welcher gegebenenfalls noch ein Sauerstoffatom oder ein weiteres Stickstoffatom als Ringglied enthält, wobei die Gruppe

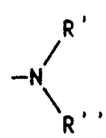

vorzugsweise ein substituierter oder unsubstituierter $\Delta^2$-Pyrazolin-1-yl-Rest ist.

Wesentlicher Bestandteil des erfindungsgemäßen, mehrschichten elektrophotographischen Aufzeichnungsmaterials ist die neue photoleitende Schicht (B).

Die neue photoleitende Schicht (B) enthält ein oder mehrere Bindemittel ($b_1$), eine oder mehrere Ladungsträger erzeugende Verbindunge(en) oder Sensibilisatoren ($b_2$) und eine oder mehrere Ladungsträger transportierende Verbindung(en) oder Photoleiter ($b_3$) gemeinsam nebeneinander.

Oder die neue photoleitende Schicht (B) enthält den oder die Sensibilisator(en) in einer separat vorliegenden Schicht, so daß die neue photoleitende Schicht (B) eine Doppelschicht darstellt.

Welche neue photoleitende Schicht (B) man für den Aufbau der erfindungsgemäßen Aufzeichnungsmaterialien auswählt, richtet sich in erster Linie nach dem Verwendungszweck der Aufzeichnungsmaterialien.

Der erfindungswesentliche Bestandteil der neuen photoleitenden Schicht (B) ist der oder die Sensibilisator(en) ($b_2$). Hierbei handelt es sich um einen oder um mehrere Isoindoleninfarbstoff der allgemeinen Formel I, worin die Indizes und die Variablen die anspruchsgemäße Bedeutung haben und welche im folgenden kurz als Isoindoleninfarbstoffe I oder Ia bezeichnet werden.

Neben Acetyl, Benzoyl, 4-Nitrophenyl, 4-Cyanphenyl, Carbamoyl und Cyan kommen als Substituenten A noch die folgenden Reste in Betracht:

a) Carbo-$C_1$-$C_4$-Alkoxy wie Carbomethoxy, Carboethoxy, Carbo-n-propoxy, Carboisopropoxy, Carbo-n-butyoxy und Carboisobutoxy;

b) gegebenenfalls im Alkyl substituiertes N-Alkylcarbamoyl wie Methyl-, N-Ethyl-, N-Propyl-, N-Butyl-, N-(3-Methoxypropyl)-, N-(3-Ethoxypropyl)-, N-(3-Propoxypropyl)- und N-(3-Butoxypropyl)-carbamoyl;

c) gegebenenfalls im Phenyl substituiertes N-Phenylcarbamoyl wie N-Phenyl-, N-(4-Methylphenyl)-, N-(2-Methylphenyl)-, N-(4-Ethoxyphenyl)-, N-(4-Isopropylphenyl)-, N-(4-Isobutylphenyl)-, N-(4-tert.-Butylphenyl)-, N-(4-Methoxyphenyl)-, N-(4-Ethoxyphenyl)- und N-(4-Butoxyphenyl)carbamoyl.

Hiervon ist Cyan als Substituent A bevorzugt.

Beispiele geeigneter Substituenten X sind Chlor, Methyl, Ethyl, Methoxy, Ethoxy, Butoxy, wobei $n = 1$ oder 2 ist. Vorzugsweise ist X Wasserstoff.

Beispiele geeigneter Substituenten $R^1$ sind neben Wasserstoff Methyl, Ethyl und 2-Hydroxyethyl, wenn $R^2$ Cyclohexyl, Phenyl oder substituiertes Phenyl wie 4-Methylphenyl, 4-Ethylphenyl, 4-Methoxyphenyl, 4-Ethoxyphenyl, 4-Butoxyphenyl, 4-Isopropylphenyl ist. Wenn $R^1$ Wasserstoff ist, ist $R^2$ auch $C_1$-$C_4$-Alkyl, wie Methyl, Ethyl, Propyl, i-Propyl, Butyl, i-Butyl oder tert.-Butyl. Weitere Beispiele geeigneter Substituenten $R^1$ und $R^2$ sind im einzelnen:

d) gegebenenfalls substituiertes $C_1$-$C_6$-Alkyl wie Methyl, Ethyl, n-Propyl, n-Butyl, Pentyl, Hexyl, 2-Chlorethyl, 2-Cyanethyl, 2-Hydroxyethyl, 2-Ethoxyethyl, 2-Propoxyethyl, 2-Butoxyethyl, 2-Phenoxyethyl, 2-(Ethanoyloxy)-ethyl, 2-(Propanoyloxy)-ethyl, 2-(Butanoyloxy)-ethyl, 2-(Pentanoyloxy)-ethyl; 2-(Methoxyethanoyloxy)-ethyl, 2-(Ethoxyethanoyloxy)-ethyl, 2-(Phenoxyethanoyloxy)-ethyl, 2-(Carbomethoxy)-ethyl, 2-(Carboethoxy)-ethyl, 2-(Carbobutoxy)-ethyl und 2-(Carbopropoxy)-ethyl;

e) Allyl und Phenyl-$C_1$-$C_4$-Alkyl wie Benzyl, $\beta$-Phenyl-ethyl, $\beta$-Phenylpropyl, $\alpha$-Phenylpropyl und Phenylbutyl; oder

f) die Gruppe

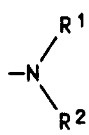

stellt einen gesättigten oder partiell ungesättigten 5- oder 6-gliedrigen heterocyclischen Rest dar, wie N-Pyrrolidinyl, N-Piperidinyl, N-Morpholinyl, N-Piperazinyl, N′-$C_1$-$C_4$-Alkylpiperazinyl mit Methyl, Ethyl, Propyl oder Butyl als Alkylrest am N′-Atom, Pyrazolidin-1-yl, $\Delta^2$-3-Methyl-pyrazolin-1-yl, $\Delta^2$-3,5,5-Trimethylpyrazolin-1-yl, $\Delta^2$-3-Methyl-5-phenyl-pyrazolin-1-yl, $\Delta^3$-3,5-Diphenylpyrazolin-1-yl und N-Imidazolyl.

Beispiele geeigneter Substituenten Y sind neben Wasserstoff, Hydroxy, Methyl und Ethyl

g)

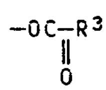

mit $R^3$ = Methyl, Ethyl, Propyl, Butyl, Hexyl, 1-Ethylphenyl, Heptyl, Nonyl, Undecyl, Dodecyl, Phenyl, 4-Methoxyphenyl, 4-Ethylphenyl, 4-Methoxyphenyl und 4-Ethoxyphenyl;

h)

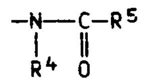

mit $R^4$ = $C_1$-$C_4$-Alkyl wie Methyl, Ethyl, Propyl oder vorzugsweise Wasserstoff und $R^5$ = Wasserstoff oder

α) $C_1$-$C_{12}$-Alkyl wie Methyl, Ethyl, n-Propyl, Isopropyl, Butyl, Isobutyl, 2-Methylpropyl, tert.-Butyl, n-Pentryl, 2,2-Dimethylpropyl, 1-Methylbutyl, 1-Ethylpropyl, 1,1-Dimethylpropyl, n-Hexyl, 1,1-Dimethylbutyl, 1,3-Dimethylbutyl, Heptyl, 1-Ethyl-pentyl, 1-Propylbutyl, 2,4-Dimethylpentyl, Octyl, Nonyl, Decyl, Undecyl, 1,1-Dimethylnonyl, Dodecyl;

β) Alkoxy-, Phenoxy- und Phenylthiomethyl wie Methoxymethyl, Ethoxymethyl, Propoxymethyl, Butoxymethyl, Phenoxymethyl, 2-, 3- und 4-Isobutylphenoxymethyl, 4-tert.-Butyl-2-methylphenoxymethyl, 2,3-Dimethylphenoxymethyl, 2,4-Dimethylphenoxymethyl, 2,5-Dimethylphenoxymethyl, 3,5-Dimethylphenoxymethyl, 3,4-Dimethylphenoxymethyl, 2-, 3- und 4-Chlorphenoxymethyl, 4-Nitrophenoxymethyl, Phenylthiomethyl, 4-Methylphenylthiomethyl, 4-tert.-Butylphenylthiomethyl,

γ) $C_3$-$C_7$-Cycloalkyl wie Cyclopropyl, Cyclobutyl, Cyclopentyl, Cyclohexyl und Cycloheptyl,

δ) Phenyl, durch Alkyl, Alkoxy oder Nitro substituiertes Phenyl wie 2-, 3- und 4-Methylphenyl, 2-, 3- und 4-Ethylphenyl, 2-, 3- und 4-n- oder i-Propylphenyl, 2-, 3- und 4-n- oder i-Butylphenyl, 4-Dodecylphenyl, 4-Methoxyphenyl, 4-Ethoxyphenyl, 4-n- oder i-Propoxyphenyl und 4-n- oder i-Butoxyphenyl;

ε) einen Rest der Formel $-CH_2-PO(OR^6)_2$, mit $R^6$ = Methyl, Ethyl, n- oder i-Propyl und n- oder i-Butyl;

neben den bereits für $R^5$ genannten Gruppen Trifluormethyl, Chlormethyl, Benzyl, Phenylethyl und $C_6H_5-CH=CH-$;

i)

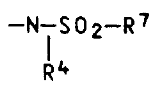

mit $R^4$ = $C_1$-$C_4$-Alkyl wie Methyl, Ethyl und Propyl oder vorzugsweise Wasserstoff und $R^7$

α) $C_1$-$C_{12}$-Alkyl wie Methyl, Ethyl, Propyl, Butyl, Pentyl, Hexyl, Octyl, Nonyl, Decyl und Dodecyl oder

β) Phenyl, durch $C_1$-$C_{12}$-Alkyl substituiertes Phenyl wie 2-, 3- und 4-Methylphenyl, 2-, 3- und 4-Ethylphenyl, 2-, 3- und 4-Isopropylphenyl, 2-, 3- und 4-Isobutylphenyl, 4-Pentylphenyl, 4-Hexylphenyl, 4-Octylphenyl, 4-Nonylphenyl, 4-Decylphenyl und 4-Dodecylphenyl.

Für Y kommt ferner $C_1$-$C_4$-Alkylamino wie Methylamino, Ethylamino, Propylamino und Butylamino in Betracht, wenn $R^1$ und $R^2$ $C_1$-$C_4$-Alkyl sind.

Außerdem kann Y N,N-Di-$C_1$-$C_4$-Alkylamino wie Dimethylamino, Diethylamino, Dipropylamino und Dibutylamino oder N-Pyrrolidinyl, N-Piperidinyl, N-Morpholinyl oder N′-$C_1$-$C_4$-Alkyl-piperazinyl sein, wenn

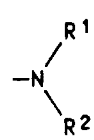

die gleiche Bedeutung hat.

Z steht vorzugsweise für Wasserstoff.

Z kann auch für Methoxy oder Ethoxy stehen, wenn $R^1$ und $R^2$ $C_1$-$C_4$-Alkyl oder Allyl und Y eine Gruppe der Formel

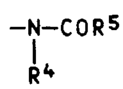

ist.

Von den Insoindoleninfarbstoffen I sind solche der allgemeinen Formel Ia

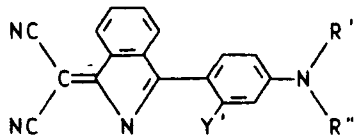

bevorzugt.

In der Formel Ia steht

Y' für Wasserstoff, Hydroxy,

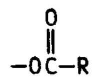

Methyl, -NH-COR$^8$ oder -NH-SO$_2$R$^9$, worin R$^8$ lineares oder verzweigtes $C_1$-$C_{12}$-Alkyl, Methoxymethyl, gegebenenfalls im Phenoxy durch Methoxy oder $C_1$-$C_4$-Alkyl substituiertes Phenoxymethyl, gegebenenfalls im Phenyl durch $C_1$-$C_4$-Alkyl substituiertes Phenylthiomethyl, Benzyl, Phenylethyl, Phenyl, $C_1$-$C_{12}$-Alkylphenyl, $C_6H_5$-CH=CH-, $C_3$-$C_7$-Cycloakyl, $C_1$-$C_4$-Alkoxyphenyl, -$CH_2$-PO($OCH_3$)$_2$, -$CH_2$-PO($OC_2H_5$)$_2$, -$CH_2$-PO($OC_3H_7$)$_2$ oder -$CH_2$-PO($OC_4H_9$)$_2$; R$^9$ $C_1$-$C_{12}$-Alkyl, Phenyl oder durch $C_1$-$C_{12}$-Alkyl substituiertes Phenyl und R $C_1$-$C_6$-Alkyl oder Phenyl bedeuten und

R' und R" für $C_1$-$C_4$-Alkyl, 2-Hydroxyethyl, $C_1$-$C_4$-Alkoxyethyl, 2-Phenoxyethyl, 2-Chlorethyl, 2-Cyanethyl, 2-(Carbomethoxy)-ethyl, 2-(Carboethoxy)-ethyl, 2-(Propanoyloxy)-ethyl, 2-(Ethanoyloxy)-ethyl, Allyl, Benzyl, wobei die Substituenten R' und R" gleich oder verschieden sein können; oder

R' steht für Wasserstoff oder Methyl und

R" für Phenyl, durch Methyl, Ethyl, Methoxy oder Ethoxy substituiertes Phenyl oder Cyclohexyl;

oder die Gruppe

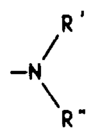

ist N-Pyrrolidinyl, N-Piperidinyl, N-Morpholinyl, Pyrazolidin-1-yl, $\Delta^2$-3-Methyl-pyrazolin-1-yl, $\Delta^2$-3,5,5-Trimethylpyrazolin-1-yl, $\Delta^2$-3-Methyl-5-phenyl-pyrazolin-1-yl, $\Delta^3$-3,5-Diphenylpyrazolin-1-yl oder N-Imidazolyl.

Außerdem kommen die Isoindoleninfarbstoffe Ia in Betracht, in der die Gruppe

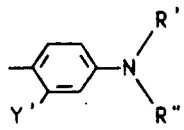 für 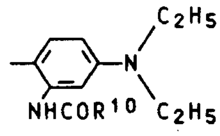

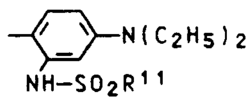 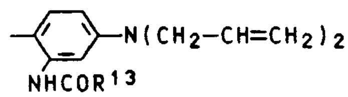

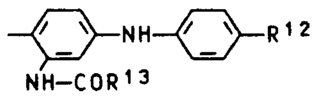 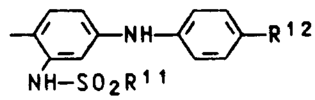

steht, worin

- $R^{10}$ lineares oder verzweigtes $C_1$-$C_{12}$-Alkyl, Methoxymethyl, Phenoxymethyl, das im Phenoxy gegebenenfalls durch Methoxy oder $C_1$-$C_4$-Alkyl substituiert ist, $C_3$-$C_7$-Cycloalkyl, Phenyl, durch $C_1$-$C_4$-Alkoxy oder $C_1$-$C_4$-Alkyl substituiertes Phenyl, Benzyl, Phenylethyl oder $C_6H_5$-CH=CH-;
- $R^{11}$ $C_1$-$C_{12}$-Alkyl, Phenyl oder $C_1$-$C_{12}$-Alkylphenyl;
- $R^{12}$ Wasserstoff, Methyl, Ethyl, Methoxy oder Ethoxy und
- $R^{13}$ $C_1$-$C_6$-Alkyl bedeuten.

Beispiele ganz besonders vorteilhafter, erfindungsgemäß zu verwendender Isoindoleninfarbstoffe Ia sind die Isoindoleninfarbstoffe Ia-1 bis Ia-9, von denen die Isoindoleninfarbstoffe Ia-3, Ia-4, Ia-5, Ia-7 und Ia-9 als solche neu sind.

Ia-1
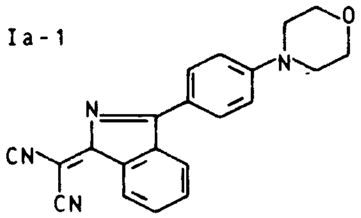

Ia-2
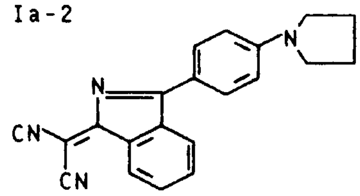

Ia-3
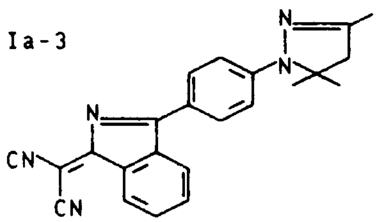

Ia-4
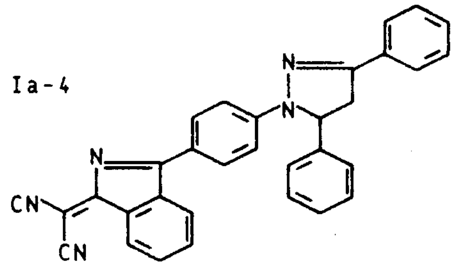

Ia-5
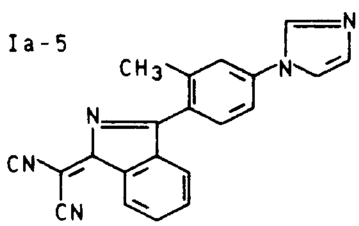

Ia-6
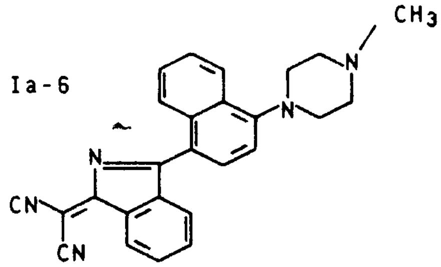

Ia-7
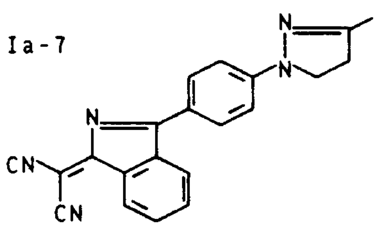

Ia-8
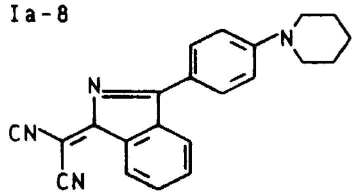

Ia-9
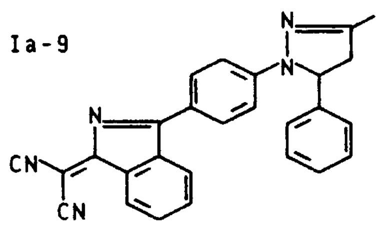

Von diesen wiederum ist der Isoindoleninfarbstoff Ia-3 besonders hervorzuheben.

Beispiele erfindungsgemäß zu verwendender Isoindoleninfarbstoffe I und Ia sowie ihre Herstellweise sind aus der EP-A-0 017 132 bekannt. Die neuen Isoindoleninfarbstoffe Ia lassen sich gleichfalls nach der bekannten Herstellweise gewinnen. Ihre Verwendung als Sensibilisatoren ($b_2$) in mehrschichtigen, elektrophotographischen Aufzeichnungsmaterialien geht aus der EP-A-0 017 132 nicht hervor.

Die erfindungsgemäß zu verwendenden Isoindoleninfarbstoffe I und/oder Ia sind in der neuen photoleitenden Schicht (B) als Sensibilisatoren ($b_2$) neben den Komponenten ($b_1$), ($b_3$) und gegebenenfalls ($b_4$) in einer Menge von 0,05 bis 20, vorzugsweise 0,1 bis 18, vorteilhafterweise 0,5 bis 15 und insbesondere 1,0 bis 10 Gew.-Teilen pro 100 Gew.-Teilen Bindemittel ($b_1$) enthalten.

Werden weniger als 0,5 Gew.-Teile dieser Sensibilisatoren ($b_2$) pro 100 Gew.-Teilen ($b_1$) zur neuen photoleitenden Schicht (B) hinzugegeben, so läßt deren Lichtempfindlichkeit zu wünschen übrig. Werden dagegen mehr als 20 Gew.-Teile ($b_2$) pro 100 Gew.-Teilen ($b_1$) angewendet, so kann unter Umständen die Dunkelleitfähigkeit unerwünschterweise stark ansteigen und die mechanische Festigkeit der neuen photoleitenden Schicht (B) deutlich absinken, was trotz der vorzüglichen sonstigen Eigenschaften der Schicht (B) im allgemeinen nicht in Kauf genommen werden kann. Der Bereich von 0,05 bis 10 Gew.-Teilen ($b_2$) pro 100

Gew.-Teilen ($b_1$) stellt somit ein Optimum dar, innerhalb dessen Grenzen die Menge an ($b_2$) frei gewählt und dem jeweiligen technischen Problem, dem jeweiligen Anwendungszweck und/oder der jeweiligen stofflichen Zusammensetzung der erfindungsgemäßen Aufzeichnungsmaterialien weiter angepaßt wird. Hierbei richtet sich die gewählte Menge an erfindungsgemäß zu verwendendem Isoindoleninfarbstoff I und/oder Ia insbesondere nach der Menge an Ladungsträger transportierenden Verbindungen oder Photoleitern ($b_3$) und danach, ob weitere übliche und bekannte Sensibilisatoren in der photoleitenen Schicht (B) enthalten sind.

Die erfindungsgemäß zu verwendenden Isoindoleninfarbstoffe I und/oder Ia werden auch als separat vorliegende Sensibilisatorschicht verwendet. Hierbei liegt die Schicht aus einem oder mehreren Isoindoleninfarbstoffen I und/oder Ia sowie gegebenenfalls einem oder mehreren Bindemitteln ($b_1$) dem elektrisch leitenden Träger (A) direkt auf und ist mit einer Schicht bedeckt, welche Bindemittel ($b_1$), Photoleiter ($b_2$) und gegebenenfalls Zusatzstoffe ($b_4$) enthält. Die Dicke der Sensibilisator- oder Isoindoleninfarbstoff-Schicht liegt bei 0,005 bis 5, vorzugsweise 0,05 bis 3, vorteilhafterweise 0,08 bis 2 und insbesondere 0,1 bis 0,9 µm. Sofern diese Sensibilisatorschicht dünner als 0,005 µm ist, kann sie unter Umständen die Oberfläche des Trägers (A) nicht mehr vollständig und gleichmäßig bedecken und ihre Sensibilisatorwirkung, d.h. ihre Ladungsträger erzeugende Wirkung kann für ein gegebenes technisches Problem nicht mehr ausreichend sein. Ist die Sensibilisatorschicht dicker als 5 µm, so kann dies eine Sperrschichtwirkung zur Folge haben, d.h. die Sensibilisatorschicht kann den Abfluß elektrischer Ladungen bei der bildmäßigen Belichtung mit aktinischem Licht unter Umständen erschweren. Hinsichtlich der Sensibilisierung, d.h. der Erzeugung einer ausreichenden Anzahl an Ladungsträgern, der Gleichmäßigkeit der Dicke, der Haftfestigkeit auf dem Träger (A) und der Vermeidung einer gewissen Sperrschichtwirkung stellt somit der Dickenbereich von 0,005 bis 5 µm ein Optimum dar. Innerhalb dieses Bereichs wird die Dicke der Sensibilisatorschicht frei gewählt und dem jeweiligen technischen Problem, dem jeweiligen Anwendungszweck und/oder der jeweiligen stofflichen Zusammensetzung der erfindungsgemäßen Aufzeichnungsmaterialien weiter angepaßt.

Der zweite wesentliche Bestandteil der neuen photoleitenden Schichten (B) der erfindungsgemäßen elektrophotographischen Aufzeichnungsmaterialien ist das Bindemittel ($b_1$).

Die Art der geeigneten Bindemittel ($b_1$) für die Schichten (B) richtet sich nach dem beabsichtigten Verwendungszweck der Aufzeichnungsmaterialien. Für den Kopiersektor eignen sich z.B. Celluloseether, Polyesterharze, Polyvinylchloride, Polycarbonate, Copolymere wie Styrol-Maleinsäureanhydrid-Copolymere oder Vinylchlorid-Maleinsäureanhydrid-Copolymerisate oder Mischungen solcher Bindemittel ($b_1$). Bei ihrer Auswahl spielen ihre filmbildenden und elektrischen Eigenschaften, ihre Haftfestigkeit auf dem Trägermaterial und ihre Löslichkeitseigenschaften eine besondere Rolle. Insbesondere bei Aufzeichnungsmaterialien für die Herstellung elektrophotographischer Druckplatten, und besonders bei denen für den Offsetdruck, sind solche Bindemittel ($b_1$) besonders geeignet, die in alkalischen, wäßrigen oder alkoholischen Lösungsmitteln löslich sind. Dies sind vor allem Substanzen mit alkalilöslich-machenden Gruppen, wie Anhydrid-, Carboxyl-, Sulfonsäure-, Phenol- oder Sulfonimidgruppierungen. Bevorzugt sind Bindemittel ($b_1$), insbesondere solche mit hohen Säurezahlen, die in basischen wäßrig-alkoholischen Entwicklerlösungsmitteln leicht löslich sind und ein mittleres Molekulargewicht (Gewichtsmittel), von 800 bis 150000 und insbesondere 1200 bis 80000 aufweisen. Geeignet sind z.B. Copolymerisate aus Methacrylsäure und Methacrylsäureestern, besonders Copolymerisate aus Styrol und Maleinsäureanhydrid oder aus Styrol, Methacrylsäure und Methacrylsäureester, soweit sie die vorstehende Löslichkeitsbedingung aufweisen. Obwohl bekanntermaßen Bindemittel ($b_1$) mit freien Carboxylgruppen die Dunkelleitfähigkeit der elektrophotographischen Schichten in unerwünschter Weise erhöhen, und dadurch zu schlechten Betonerungsergebnissen führen können, lassen sich solche Bindemittel ($b_1$) leicht an die verwendeten Ladungstransportverbindungen Photoleiter ($b_3$) anpassen. So hat sich gezeigt, daß Copolymerisate aus Styrol, Maleinsäureanhydrid und Acryl- oder Methacrylsäure, die einen Anteil von einpolymerisiertem Maleinsäureanhydrid von 5 bis 50 Gew.% und ein Anteil von einpolymerisierter Acryl- oder Methacrylsäure von 5 bis 35 und insbesondere 10 bis 30 Gew.% aufweisen, photoleitende Schichten (B) niedriger Dunkelleitfähigkeit ergeben.

Sie weisen eine hervorragende Löslichkeit in Entwicklerlösungsmitteln aus z.B. 75 Gew.% Wasser, 23 Gew.% Isobutanol und 2 Gew.% Natriumcarbonat auf.

Der dritte wesentliche Bestandteil der neuen photoleitenden Schichten (B) der erfindungsgemäßen, mehrschichtigen, elektrophotographischen Aufzeichnungsmaterialien ist die Ladungsträger transportierende Verbindung oder der Photoleiter ($b_3$). Hierbei handelt es sich um die auf dem in Rede stehenden technischen Gebiet üblichen und bekannten niedermolekularen Oxazolderivate (DE-B-11 20 875), Oxdiazolderivate (DE-B-10 58 836), Triazolderivate (DE-B-10 60 260), Azomethine (US-A-3 041 165), Pyrazolinderivate (DE-B-10 60 714), Imidazolderivate (DE-B-11 06 599), Arylamine (DE-B-27 12 557), 1,3-Dithiolderivate (DE-B-33 38 204), Benzotriazolderivate (EP-A-0 131 292), Triazolylpyridinderivate (EP-A-0 150 419), Pyrazolotriazolderivate (EP-A-0 156 308), Triphenyltriazolderivate (EP-A-01 62 216) oder Hydrazonderivate

(EP-A-0 001 599, DE-A-29 19 791 entspricht US-A-4 367 273 und US-A-4 278 747, GB-A-2 088 074 oder DE-A-31 40 571) oder um die gleichfalls üblichen und bekannten oligomeren oder polymeren Photoleiter Poly(N-vinylcarbazol) oder Arylaminpolymere (EP-A-0 052 961).

Die neuen photoleitenden Schichten (B) enthalten einen oder mehrere dieser Photoleiter ($b_3$) in einer Menge von 40 bis 150, vorzugsweise 40 bis 130, vorteilhafterweise 50 bis 120 und insbesondere 60 bis 100 Gew.-Teile pro 100 Gew.-Teile Bindemittel ($b_1$). Darüber hinaus kann die neue photoleitende Schicht (B), bezogen auf ihre Gesamtmenge, bis zu 30 Gew.%, vorzugsweise 25 Gew.%, vorteilhafterweise 20 Gew.% und insbesondere 15 Gew.% an Zusatzstoffen ($b_4$) enthalten. Als Zusatzstoffe ($b_4$) kommen im wesentlichen nur solche in Betracht, welche die optische Transparenz der neuen photoleitenden Schicht (B) nicht beeinträchtigen. Dabei können die Zusatzstoffe die unterschiedlichsten Funktionen haben. Beispielsweise können Verlaufmittel wie Siliconöle, Netzmittel, insbesondere nichtionogene Substanzen, Weichmacher auf der Basis chlorierter Kohlenwasserstoffe oder auf der Basis von Phthalsäureestern, Haftvermittler, nicht molekular dispers einmischbare organische und anorganische Füllstoffe und Verstärkerfüllstoffe, die aus der EP-A-0 131 215 bekannten Metallactylacetonate und/oder die üblichen und bekannten Sensibilisatoren aus den Klassen der Triarylmethan-, Xanthen- oder Cyaninfarbstoffe zur Schicht (B) zusätzlich hinzugegeben werden. Darüber hinaus kann die neue photoleitende Schicht (B), sofern sie als photoleitende Doppelschicht ausgebildet ist, in der separaten Sensibilisatorschicht Ladungsträger erzeugende Pigmente aus den Klassen der Azo-, der Phthalocyanin-, der Naphtholactam- oder der Perylenfarbstoffe enthalten. Diese Pigmente können indes auch als zusätzliche separate Sensiblisatorschicht vorliegen. Darüber hinaus können diese Pigmente als einzige separate Sensibilisatorschicht der als Doppelschicht ausgebildeten neuen Schicht (B) vorhanden sein, dann allerdings muß die separate Schicht ($b_1$), ($b_3$) und gegebenenfalls ($b_4$) obligatorisch die erfindungsgemäß anzuwendenden Isoindoleninfarbstoffe I und/oder Ia enthalten.

Demnach bestehen die neuen photoleitenden Schichten (B), bezogen auf ihre Gesamtmenge, aus

- 70 bis 100, vorzugsweise 75 bis 100, vorteilhafterweise 80 bis 100 und insbesondere 85 bis 100 Gew.% eines sensibilisierten photoleitenden Gemischs aus den Komponenten ($b_1$), ($b_2$) und ($b_3$), und aus
- 0 bis 30, vorzugsweise 0 bis 25, vorteilhafterweise 0 bis 20 und insbesondere 0 bis 15 Gew.% an Zusatzstoffen ($b_4$).

Hierbei besteht das sensibilisierte photoleitende Gemisch aus jeweils

- 100 Gew.-Teilen an Bindemitteln ($b_1$) und
- 0,05 bis 20, vorzugsweise 0,1 bis 18, vorteilhafterweise 0,5 bis 15 und insbesondere 1,0 bis 10 Gew.-Teilen an erfindungsgemäß zu verwendenden Isoindoleninfarbstoffen I und/oder Ia (= Sensibilisator $b_2$) sowie
- 40 bis 150, vorzugsweise 40 bis 130, vorteilhafterweise 50 bis 120 und insbesondere 60 bis 100 Gew.-Teilen an Photoleitern ($b_3$).

Sofern die neue photoleitende Schicht (B) nicht als Doppelschicht ausgebildet ist, liegt ihre Dicke bei 0,5 bis 40, vorzugsweise 0,8 bis 25, vorteilhafterweise 1 bis 20 und insbesondere 1,5 bis 15 µm.

Sofern die neue photoleitende Schicht (B) als Doppelschicht ausgelegt ist, liegt die Dicke der Isoindoleninfarbstoffe I und/oder Ia enthaltenden Sensibilisatorschicht oder die Dicke der aus Isoindoleninfarbstoffen I und/oder Ia bestehenden Sensibilisatorschicht, wie vorstehend aufgeführt, bei 0,05 bis 5, vorzugsweise 0,05 bis 3, vorteilhafterweise 0,08 bis 2 und insbesondere 0,1 bis 0,9 µm und die Gesamtdicke der Doppelschicht liegt bei 2 bis 30, vorzugsweise 3 bis 25, vorteilhafterweise 3,5 bis 20 und insbesondere 5 bis 15 µm.

Neben der neuen photoleitenden Schicht (B) ist der elektrisch leitende Träger (A) der weitere wesentliche Bestandteil der erfindungsgemäßen, mehrschichtigen elektrophotographischen Aufzeichnungsmaterialien. Hierfür sind grundsätzlich alle elektrisch leitfähigen Trägermaterialien verwendbar, sofern sie zu dimensionsstabilen dünnen Platten oder Folien verarbeitet werden können. Je nach Verwendungszweck der erfindungsgemäßen Aufzeichnungsmaterialien werden Aluminium-, Zink-, Mangesium-, Kupfer-, Stahl- oder Mehrmetallplatten oder Platten, wie sie üblicherweise für die Leiterplattenherstellung angewandt werden, Polymerfolien mit metallisierter Oberfläche wie Aluminium-bedampfte Polyethylenterephthalatfolien oder elektrisch leitende Spezialpapiere verwendet. Hierbei sind insbesondere rohe oder vorbehandelte Aluminiumbleche oder -folien bevorzugt, so wie sie für Offsetdruckplatten typisch sind. Dabei umfaßt die Vorbehandlung der Aluminiumbleche oder -folien eine chemische, mechanische oder elektrochemische Aufrauhung der Oberfläche und/oder eine anodische Oxidation unter Bildung einer porösen Aluminiumoxidschicht, gegebenenfalls gefolgt von einer Versiegelung der betreffenden Aluminiumoxidschicht. Im allgemeinen sind die Träger (A) - je nach Verwendungszweck der Aufzeichnungsmaterialien - 50 µm bis 1,5 mm, insbesondere 80 µm bis 0,6 mm dick.

Darüber hinaus können die erfindungsgemäßen, mehrschichtigen, elektrophotographischen Aufzeichnungsmaterialien mindestens eine weitere Schicht enthalten, welche für die Funktion der Aufzeichnungsmaterialien dienlich sein kann. Bei dieser oder diesen weiteren Schicht(en) kann es sich um die vorstehend beschriebenen zusätzlichen bekannten Sensibilisatorschichten handeln, welche zwischen den Träger (A) und der neuen photoleitenden Schicht (B) angeordnet sind. Des weiteren können die aus der DE-B-25 04 545 bekannten Schichten aus z.B. teilchenförmigem Titandioxid, Zinkoxid, $\gamma$-Eisen(III)oxid, Bariumtitanat, Aluminiumoxid und Ceroxid verwendet werden. Außerdem kommen Schichten aus anorganischen Photoleitern wie Selen oder Cadmiumsulfid als zusätzliche Bestandteile der Aufzeichnungsmaterialien in Betracht. Darüber hinaus können die aus der EP-A-00 46 960 bekannten Deckschichten aus Siliciummonoxid, Magnesiumfluorid oder Calciumfluorid verwendet werden.

Die Herstellung der erfindungsgemäßen, mehrschichtigen, elektrophotographischen Aufzeichnungsmaterialien weist keine methodischen Besonderheiten auf, sondern die Herstellung der neuen photoleitenden Schichten (B) erfolgt nach den üblichen und bekannten Methoden der Herstellung dünner organischer Schichten, und die Herstellung der Träger (A) erfolgt nach den üblichen und bekannten Methoden der Erzeugung dünner Metallbleche oder Folien und metallbedampfter Polymerfolien.

Für die Herstellung der neuen photoleitenden Schicht (B) werden deren Komponenten in einer vorteilhaften Verfahrensweise in geeigneten Lösungsmitteln aufgelöst, und die resultierenden Lösungen werden auf die Träger (A) so aufgegossen, daß nach dem Trocknen der Naßschichten die Schichten (B) in der gewünschten gleichmäßigen Dicke resultieren. Sofern die neuen photoleitenden Schichten (B) als Doppelschichten ausgelegt werden sollen, werden zunächst die Isoindoleninfarbstoffe I und/oder Ia enthaltenden oder die aus Isoindoleninfarbstoffen I und/oder Ia bestehenden Sensibilisatorschichten der gewünschten Dicke durch Gießen aus Lösung und Trocknen der Naßschichten auf der Oberfläche der Träger (A) erzeugt. Hiernach werden diese Sensibilisatorschichten mit Schichten aus den Komponenten ($b_1$), ($b_3$) und gegebenenfalls ($b_4$) durch Gießen aus Lösung und Trocknen der Naßschichten bedeckt, wobei darauf geachtet wird, daß die hierbei verwendeten Lösungsmittel die vorhandenen Sensibilisatorschichten nicht beschädigen. Die Herstellung der betreffenden Gießlösungen erfolgt mit Hilfe der üblichen und bekannten Misch- und Lösungstechniken.

Sofern die erfindungsgemäßen elektrophotographischen Aufzeichnungsmaterialien weitere Schichten enthalten sollen, so werden diese mit Hilfe von Methoden erzeugt, welche für die Herstellung der jeweiligen Schichten üblich, bekannt und charakteristisch sind. Selbstverständlich richtet sich hierbei die Reihenfolge der Durchführung der einzelnen Verfahrensschritte nach dem gewünschten Aufbau der Aufzeichnungsmaterialien, bzw. ergibt es sich hieraus zwingend.

Das erfindungsgemäße, mehrschichtige, elektrophotographische Aufzeichnungsmaterial weist zahlreiche hervorragende Eigenschaften auf, welche nach Art und Anzahl mittels bekannter Aufzeichnungsmaterialien bislang zugleich nicht realisiert werden konnten. Diese bisher nicht erzielbare Kombination hervorragender Eigenschaften bewirkt einen besonderen unerwarteten technischen Effekt, welcher sich nicht nur an den erfindungsgemäßen Aufzeichnungsmaterialien selbst, sondern gerade auch bei den hieraus hergestellten Folgeprodukten - den Trommeln in Photokopiergeräten, den elektrophotographischen Offsetdruckplatten und den elektrophotographischen Photoresists - und nicht zuletzt bei den hiermit hergestellten Photokopien, Druckerzeugnissen und Leiterplatten vorteilhaft bemerkbar macht.

So weist das erfindungsgemäße Aufzeichnungsmaterial eine sehr niedrige Dunkelleitfähigkeit, verbunden mit einer hohen elektrischen Aufladbarkeit, einer besonders hohen Empfindlichkeit gegenüber aktinischem Licht und vorzüglichen elektrokinetischen Eigenschaften auf. Dieses Eigenschaftsprofil bewirkt eine hervorragende, äußerst detailgetreue, kontrastreiche Wiedergabe von Bildvorlagen in kürzerer Zeit als es bislang möglich war, was insbesondere für die betriebliche Praxis eines reprographischen Unternehmens ein besonders bedeutsamer Vorteil ist. Überdies neigt das bildmäßig belichtete erfindungsgemäße Aufzeichnungsmaterial überhaupt nicht zum Tonen in den Nichtbildbereichen, was die kontrastreiche Wiedergabe problematischer feiner Bildmotive in Bildvorlagen, wie etwa feiner Rasterpunkte in lichten Tonwertbereichen, erheblich verbessert oder gar erst ermöglicht. Trotz seiner hohen Empfindlichkeit gegenüber aktinischem Licht ist das erfindungsgemäße Aufzeichnungsmaterial einfach handhabbar, so daß hierfür besondere Vorsichtsmaßnahmen nicht zu ergreifen sind. Wegen dieser hohen Empfindlichkeit gegenüber aktinischem Licht und dem hierdurch induzierten, besonders raschen Photoabfall und weil hierbei auch im Nanosekundenbereich das Gesetz

$I \times t$ = konstant ($I$ = Lichtintensität; $t$ = Zeit)

Gültigkeit hat, kann das erfindungsgemäße Aufzeichnungsmaterial in vollem Umfang die Vorteile der modernen Belichtungsmethoden ausschöpfen. Es eignet sich daher nicht nur für die übliche bildmäßige Belichtung mittels Glühlampen und Leuchtröhren, sondern auch für die bildmäßige Belichtung mittels

impulsmodulierter oder analog modulierter Laserstrahlen, welche über das Aufzeichnungsmaterial hinweggeführt werden. Somit können für die bildmäßige Belichtung die modernen, computergesteuerten Laserbelichtungsgeräte verwendet werden, wobei diese aufgrund der vorteilhaften Eigenschaften des Aufzeichnungsmaterials ganz besonders hervorragende Abbildungsergebnisse liefern.

Das erfindungsgemäße Aufzeichnungsmaterial weist deutliche Vorteile bei der Verwendung im Photokopiersektor auf. So läßt es sich in einfacher Weise auf die in Photokopiergeräten üblicherweise vorhandenen Trommeln auftragen und ermöglicht in dieser Form exzellente Photokopien auch von vergilbten Vorlagen in hoher Auflage und in sehr kurzer Taktzeit. Außerdem lassen sich diese Trommeln nach ihrer vorteilhaft langen Lebensdauer in einfacher Weise umweltschonend entsorgen. Die hiermit hergestellten Photokopien sind besonders kontrastreich, auch in den problematischsten Motiven detailgetreu und in den Nichtbildbereichen ungetonert.

Das erfindungsgemäße Aufzeichnungsmaterial weist auch bei der Verwendung als Photoresist deutliche Vorteile auf. Zu diesem Anwendungszweck wird es auf Träger (A) aufgetragen, welche üblicherweise für die Herstellung von Leiterplatten verwendet werden. Hiernach wird es mit aktinischem Licht bildmäßig belichtet, wobei auch hier die vorstehend genannten Vorteile moderner Belichtungsmethoden voll zum Tragen kommen. Hiernach wird auf dem belichteten Aufzeichnungsmaterial in üblicher und bekannter Weise ein Tonerbild erzeugt und durch Erhitzen fixiert, wonach man die unbetonerten Nichtbildbereiche mit geeigneten Entwicklerlösungsmitteln entfernt. In dieser Weise erhält man ein hervorragendes detailgetreues Photoresistmuster, welches frei von Lochfraß, Unterwaschungen der Reliefflanken und Kantenausbrüchen ist, hervorragend auf dem Träger (A) haftet und welches gegenüber den üblicherweise verwendeten Ätzchemikalien und Galvanikbädern sehr gut beständig ist. Mit Hilfe dieses Verfahrens werden - weitgehend ohne Ausschuß - fehlerfreie Leiterplatten erhalten, deren Lebensdauer vorteilhaft lang ist.

Ganz besonders deutliche Vorteile weist das erfindungsgemäße Aufzeichnungsmaterial bei der Verwendung für die Herstellung von elektrophotographischen Offsetdruckplatten auf, welche in an sich üblicher und bekannter Weise durch

1. eine elektrostatische Aufladung des erfindungsgemäßen Aufzeichnungsmaterials mittels einer Hochspannungscorona,
2. eine sich direkt hieran anschließende bildmäßige Belichtung des Aufzeichnungsmaterials mit aktinischem Licht, wodurch ein latentes elektrostatisches Ladungsbild erzeugt wird,
3. die Entwicklung des latenten elektrostatischen Ladungsbildes mittels eines Trocken- oder Flüssig-Toners, gefolgt von
4. dem Fixieren des Tonerbildes durch Erhitzen und
5. dem Wegwaschen der unbetonerten Nichtbildbereiche der neuen photoleitenden Schicht (B) des erfindungsgemäßen Aufzeichnungsmaterials mittels einer geeigneten Entwicklerflüssigkeit, wodurch die hydrophile Oberfläche des Trägers (A) freigelegt wird,

erfolgt.

Hierbei kann das erfindungsgemäße Aufzeichnungsmaterial mit einer besonders hohen Spannung beaufschlagt und binnen kurzer Belichtungszeit bildmäßig belichtet werden, wobei die Vorteile der modernen Belichtungsmethoden in vollem Umfang ausgeschöpft werden können. Hierdurch resultieren rasch und zuverlässig völlig detailgetreue, kontrastreiche latente Ladungsbilder, welche Tonerbilder liefern, die in den Nichtbildbereichen völlig unbetonert sind. Diese reprographische Genauigkeit ermöglicht überdies die Verwendung von Tonern, welche man ansonsten nicht in Betracht gezogen hätte, wodurch das gesamte Herstellverfahren breiter variiert und besser an spezielle technische Probleme angepaßt werden kann. Nach dem Fixieren des Tonerbildes erfolgt das Entfernen der Nichtbildbereiche problemlos und ohne nachträgliche Beschädigung des Tonerbildes. Hierbei können eine Vielzahl unterschiedlicher Entwicklerlösungsmittel verwendet werden. Die Auswahl der Entwicklerlösungsmittel richtet sich, wie vorstehend erwähnt, in erster Linie nach der stofflichen Zusammensetzung der ursprünglichen photoleitenden Schicht (B), wobei die Löslichkeit oder Quellbarkeit des darin enthaltenen Bindemittels ($b_1$) der wesentliche Parameter ist. Bedingt durch die nun mögliche verbesserte gegenseitige Anpassung der Tonermaterialien und der Materialien der ursprünglichen photoleitenden Schicht (B) können Entwicklerlösungsmittel mit erheblich stärkerem Lösevermögen und/oder Auswaschverfahren, welche mit höherem Lösungsmittel- oder Bürstendruck arbeiten, angewendet werden. Hierdurch resultiert eine kürzere Entwicklungszeit, ohne daß dabei die Bildbereiche beschädigt werden.

Die hiernach erhaltene elektrophotographische Offsetdruckplatte gibt auch diejenigen Bildelemente oder Motive, welche sich ansonsten nur schwer zuverlässig reproduzieren lassen, in bester Qualität wieder. Sie kann in bekannter Weise für den Offsetdruck, z.B. mittels einer Hydrophilierung oder eine Gummierung, weiter vorbereitet werden, um die ohnedies vorzügliche Qualität der Offsetdruckplatte noch weiter zu steigern.

Beim Drucken auf einem Offsetdruckwerk mit Offsetdruckfarben vom Typ "Öl-in-Wasser" nehmen die Bildbereiche der Offsetdruckplatte die ölige Farbe hervorragend an, wogegen ihre entschichteten Bereiche hervorragend wasserführend sind. Hierdurch resultiert ein ausgezeichneter Kontrast und ein äußerst präzisier Druck, was insgesamt zu exzellenten Druckerzeugnissen führt. Da die Offsetdruckplatte unter den Druckbedingungen eine vorteilhaft lange Lebensdauer hat, wird überdies eine hohe Auflage erzielt.

Beispiele und Vergleichsversuche

Bei den folgenden Beispielen und Vergleichsversuchen wurden die anwendungstechnischen Eigenschaften nach dem xerographischen Verfahren (Carlson-Prozess) bestimmt. Hierzu wurden sowohl erfindungsgemäße (Beispiele 1 bis 8) als auch bekannte (Vergleichsversuche V1 bis V8) elektrophotographische Aufzeichnungsmaterialien hergestellt, in üblicher und bekannter Weise mittels einer Gleichspannungscorona von plus oder minus 8,5 kV aus 1 cm Abstand binnen 20 Sekunden gleichmäßig auf ein Oberflächenpotential von bis zu plus oder minus 1000 V aufgeladen und hiernach bildmäßig oder binnen einer Sekunde vollflächig belichtet. Selbstverständlich wurden hierbei die einzelnen Verfahrensschritte unter jeweils exakt vergleichbaren Bedingungen durchgeführt, so daß der in üblicher und bekannter Weise induktiv gemessene, durch die vollflächige Belichtung induzierte Spannungsabfall (= Photoabfall PHA in %, ursprünglicher Wert = 100 %) eindeutig die Vorteilhaftigkeit der erfindungsgemäßen Aufzeichnungsmaterialien belegte.

Beispiel 1 und Vergleichsversuch V1

Jeweils 0,544 g eines Copolymerisats, welches 52 Gew.% Styrol, 28 Gew.% Methyacrylsäure und 20 Gew.% Maleinsäureanhydrid einpolymerisiert enthielt (Bindemittel ($b_1$), wurden in jeweils 9 g Tetrahydrofuran innerhalb 30 Minuten aufgelöst. Zu diesen beiden resultierenden Copolymerisatlösungen gab man jeweils 0,5 g 2,5-Bis-(4′-diethylamino-phen-1′-yl)-1,3,4-oxdiazol (Photoleiter $b_3$) und rührte weitere 15 Minuten nach.

Parallel hierzu wurde eine Lösung aus 0,006 g des erfindungsgemäß zu verwendenden Isoindoleninfarbstoffs Ia-3 (Sensibilisator $b_2$, Beispiel 1) und eine Lösung aus 0,006 g Rhodamin B (Vergleichsversuch V1) in jeweils 1 g Ethylenglykolmonoethylether hergestellt.

Hiernach wurde jeweils eine Sensibilisatorlösung mit einer Bindemittel/Photoleiter-Lösung vereinigt. Die vereinigten Lösungen wurden auf 0,30 mm dicke, elektrochemisch aufgerauhte und anodisch oxidierte Aluminiumbleche (Träger A) ausgegossen und getrocknet, so daß 5 µm dicke, neue, photoleitende Schichten (B) (Beispiel 1) und bekannte photoleitende Schichten (Vergleichsversuch V1) resultierten. Diese Schichten wurden negativ aufgeladen und hiernach mittels einer Xenonhochdrucklampe belichtet. Hierbei befand sich zwischen der Lichtquelle und dem Aufzeichnungsmaterial ein sogenannter "high pass filter" OG 590 der Firma Spindler und Hoyer, welcher lediglich Licht des Wellenlängenbereichs oberhalb $\lambda$ = 590 nm passieren ließ. Der hieraus resultierende Photoabfall wurde in bekannter Weise induktiv gemessen. Hierbei zeigte das erfindungsgemäße Aufzeichnungsmaterial einen Photoabfall von 91 % (Beispiel 1), wogegen das bekannte Aufzeichnungsmaterial einen Photoabfall von 89 % (Vergleichsversuch V1) aufwies. Demnach war die sensibilisierende Wirkung des erfindungsgemäß zu verwendenden Isoindoleninfarbstoffs Ia-3 im roten und infraroten Spektralbereich derjenigen des Rhodamin B überlegen.

Beispiel 2 und Vergleichsversuch V2

Beispiels 1 und Vergleichsversuch V1 wurden wiederholt, mit dem Unterschied, daß sowohl das erfindungsgemäße als auch das bekannte Aufzeichnungsmaterial nach dem Aufladen in einem marktgängigen Laser-Rekorder der Firma Hope mit Hilfe eines Helium-Neon-Lasers (Wellenlänge $\lambda$ der Hauptemission = 633 nm) bildmäßig belichtet wurden. Hierbei lag die Schreibgeschwindigkeit bei einer Bildpunktfolgefrequenz von 3,8 MHz bei 193 m/s, was bei einem Plattenvortrieb in 27 µm-Schritten 42 $cm^2 \cdot s^{-1}$ an belichteter Fläche entsprach.

Nach der bildmäßigen Belichtung wurden das erfindungsgemäße und das bekannte Aufzeichnungsmaterial betonert, wobei man als Toner in einem Thermoplasten dispergierten Ruß verwendete. Nach dem Tonen wurden die beiden resultierenden Tonerbilder durch Erhitzen auf 100 °C fixiert.

Bereits hierbei wies das bekannte Aufzeichnungsmaterial Nachteile auf, indem seine Nichtbildbereiche schwach aber dennoch merklich betonert waren, wogegen das erfindungsgemäße Aufzeichnungsmaterial in den Nichtbildbereichen völlig tonerfrei war.

Hiernach wurden die beiden Aufzeichnungsmaterialien durch Überwischen mit einer Entwicklerflüssigkeit aus 0,5 Gew.% Natriumcarbonat, 0,3 Gew.% Wasserglas, 25 Gew.% Isopropanol und 74,2 Gew.%

Wasser entwickelt, wodurch in den nicht Bildbereichen die Oberfläche der Träger (A) freigelegt wurde. In dieser Weise wurde sowohl bei dem erfindungsgemäßen als auch bei dem bekannten Aufzeichnungsmaterial die für Offsetdruckplatten typische Differenzierung in hydrophile und oleophile Bereiche erzielt, wobei die freigelegte Oberfläche der Träger (A) die hydrophilen Bereiche bildete.

Hiernach wurden die beiden Offsetdruckplatten mit Wasser nachgespült, und es wurde die Hydrophilie der freigelegten Trägeroberfläche durch Überwischen mit verdünnter Phosphorsäure weiter erhöht.

Nach dem Einfärben mit einer Offsetdruckfarbe vom Typ "Öl-in-Wasser" wurden mit beiden Offsetdruckplatten in einem Offsetdruckwerk gedruckt.

Hierbei lieferte die aus dem erfindungsgemäßen Aufzeichnungsmaterial hergestellte Offsetdruckplatte (Beispiel 2) in hoher Auflage exzellente, völlig vorlagengetreue Druckerzeugnisse, die höchsten Qualitätsansprüchen genügten, wogegen die bekannte Offsetdruckplatte nur Druckerzeugnisse mäßiger Qualität liefern konnte.

Dies belegt, daß mit Hilfe des erfindungsgemäßen, elektrophotographischen Aufzeichnungsmaterials die Vorteile moderner Belichtungsmethode in vollem Umfang nutzbar gemacht werden können.

Beispiel 3 und Vergleichsversuch V3

Es wurden zwei Lösungen aus jeweils 1 g Poly(N-vinylcarbazol) in jeweils 8 g Tetrahydrofuran hergestellt.

Zu einer dieser Lösungen wurde eine Lösung von 0,02 g des Isoindoleninfarbstoffs Ia-3 in 1 g Ethylenglykolmonoethylether hinzugegeben (Beispiel 3); der anderen Lösung wurde die entsprechende Rhodamin B-Lösung zugesetzt (Vergleichsversuch V3).

Aus den beiden resultierenden Lösungen wurden in üblicher und bekannter Weise ein erfindungsgemäßes und ein bekanntes Aufzeichnungsmaterial durch Gießen aus Lösung hergestellt, wobei die bei Beispiel 1 erwähnten Aluminiumbleche Verwendung fanden. Beide Aufzeichnungsmaterialien wurden sowohl positiv als auch negativ aufgeladen und mit einer Xenonhochdrucklampe belichtet, wonach man den hierdurch resultierenden Photoabfall maß.

Im Falle des positiv aufgeladenen, erfindungsgemäßen Aufzeichnungsmaterials war dieser Photoabfall 81,2 %, im Falle des negativ aufgeladenen 73,6 % (Beispiel 3). Die entsprechenden Werte des bekannten Aufzeichnungsmaterials waren 60,1 % und 51,4 % (Vergleichsversuch V3), was die Überlegenheit des erfindungsgemäßen Aufzeichnungsmaterials dokumentiert.

Beispiele 4 bis 8 und Vergleichsversuche V4 bis V8

Allgemeine Versuchsvorschrift:

Es wurde eine Lösung aus 0,6 g Polycarbonat (®Makrolon 2800 der Bayer AG), 0,4 g eines Photoleiters ($b_3$) und 8 g Tetrahydrofuran mit einer Lösung aus 0,02 g eines Sensibilisators und 1 g Ethylenglykolmonoethylether vereinigt. Die resultierende Lösung wurde in üblicher und bekannter Weise durch Gießen aus Lösung zu einem Aufzeichnungsmaterial verarbeitet, wobei auch hier die vorstehend erwähnten Aluminiumbleche Verwendung fanden.

Das resultierende Aufzeichnungsmaterial wurde, wie bei Beispiel 3 angegeben, getestet.

Tabelle 1 gibt einen Überblick über die verwendeten Sensibilisatoren und Photoleiter und faßt die an den hergestellten Aufzeichnungsmaterialien erhaltenen Ergebnisse zusammen.

Die Versuche belegen erneut die vorzügliche sensibilisierende Wirkung der erfindungsgemäß zu verwendenden Isoindoleninfarbstoffe I und/oder Ia.

Beispiel 9

Die Herstellung des erfindungsgemäßen Isoindoleninfarbstoffs Ia-3;
Versuchsvorschrift:

5 g des Isoindoleninderivates

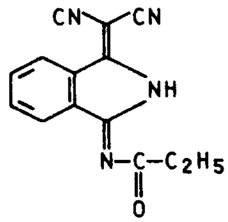

und 4,13 g des Pyrazolinderivates

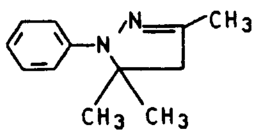

wurden zusammen mit 2 Tropfen konzentrierter Schwefelsäure in 20 ml Toluol während 2 Stunden unter Rühren am Rückfluß erhitzt. Hiernach wurde die resultierende Reaktionsmischung abgekühlt, wobei sich das Rohprodukt Ia-3 als Feststoff abschied. Das Rohprodukt wurde abgetrennt und zunächst mit Methanol und anschließend mit heißem Wasser gewaschen. Hierdurch resultierte der reine Isoindoleninfarbstoff Ia-3

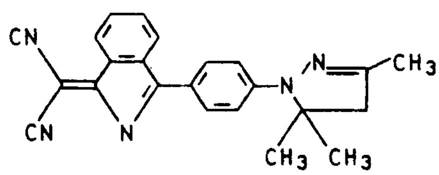

Ia-3

in einer Ausbeute von 40 %, bezogen auf das Isoindoleninderivat. Die elementare Zusammensetzung von Ia-3 entsprach den theoretisch berechneten Werten. Das Absorptionsspektrum von Ia-3 wies im Spektralbereich von λ = 270 bis λ = 750 nm drei Maxima bei 297, 316 und und 610,5 nm auf.

Tabelle 1: Beispiele 4 bis 8 und Vergleichsversuche V4 bis V8

Die sensibilisierende Wirkung des erfindungsgemäß zu verwendenden Isoindoleninfarbstoffs Ia-3 in Gegenwart unterschiedlicher Photoleiter ($b_3$) und der Vergleich mit Rhodamin B

| Beispiel und Vergleich | Photoleiter ($b_3$) | Sensibilisator ($b_2$) | Photoinduzierter Spannungsabfall (%) nach positiver Aufladung | nach negativer Aufladung |
|---|---|---|---|---|
| 4 | 2,5-Bis-(4'-diethylamino-phen-1-yl)-1,3,4-oxdiazol | Ia-3 | 87,4 | 92,4 |
| V4 | " | Rhodamin B | 33,4 | 39,4 |
| 5 | 2-Vinyl-4-(4'-N,N-diethylamino-phenyl-1'-yl)-5-(2-chlor-phenyl)-1,3-oxazol | Ia-3 | 65,0 | 80,6 |
| V5 | " | Rhodamin B | 19,3 | 21,1 |
| 6 | 2-(4'-N-Ethyl-N-phenylamino-phen-1'-yl)-5-methoxi-benzotriazol | Ia-3 | 61,6 | 74,9 |
| V6 | " | Rhodamin B | 10,8 | 15,2 |
| 7 | 1-Phenyl-3-(4'-N,N-diethylamino-β-styryl)-5-(4'-N,N-diethylamino-phen-1'-yl)-$\Delta^2$-pyrazolin | Ia-3 | 95,2 | 92,4 |
| V8 | " | Rhodamin B | 22,7 | 50,3 |
| 8 | 4-N,N-Diethylamino-benzaldehyd-diphenyl-hydrazon | Ia-3 | 95,6 | 91,3 |
| V8 | " | Rhodamin B | 28,2 | 60,2 |

## Patentansprüche

**1.** Mehrschichtiges, elektrophotographisches Aufzeichnungsmaterial mit

(A) einem elektrisch leitenden Träger und mit

(B) einer oder mehreren Schicht(en) aus

($b_1$) einem oder mehreren Bindemittel(n),

($b_2$) einer oder mehreren Ladungsträger erzeugenden Verbindung(en) oder Sensibilisatoren,

($b_3$) einer oder mehreren Ladungsträger transportierenden Verbindung(en) oder Photoleitern und ggf.

($b_4$) Zusatzstoffen,

dadurch gekennzeichnet, daß man hierin als Ladungsträger erzeugende Verbindungen oder Sensibilisatoren ($b_2$) Isoindoleninfarbstoffe der allgemeinen Formel I verwendet,

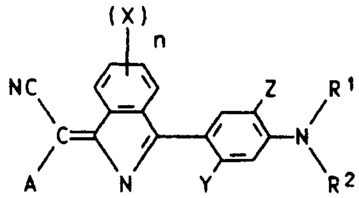

worin der Index und die Variablen die folgende Bedeutung haben:

| | |
|---|---|
| A | Cyan, Carbo-$C_1$-$C_4$-Alkoxy, Carbamoyl, N-$C_1$-$C_4$-Alkylcarbamoyl, worin der Alkylrest gegebenenfalls durch $C_1$-$C_4$-Alkoxy substituiert ist, N-Phenylcarbamoyl, worin der Phenylrest gegebenenfalls durch $C_1$-$C_4$-Alkyl oder $C_1$-$C_4$-Alkoxy substituiert ist, Acetyl, Benzoyl, 4-Nitrophenyl oder 4-Cyanphenyl; |
| X | Wasserstoff, Chlor, $C_1$-$C_4$-Alkyl, $C_1$-$C_4$-Alkoxy, wobei bei n = 2 die Substituenten gleich oder verschieden sein können; |
| n | 1 oder 2; |
| $R^1$ | Wasserstoff, Methyl, Ethyl oder 2-Hydroxyethyl und |
| $R^2$ | Phenyl, durch $C_1$-$C_4$-Alkyl oder $C_1$-$C_4$-Alkoxy substituiertes Phenyl oder Cyclohexyl; oder |
| $R^1$ | Wasserstoff und |
| $R^2$ | $C_1$-$C_4$-Alkyl; oder |
| $R^1$ und $R^2$ | $C_1$-$C_6$-Alkyl; durch Chlor, Cyan, Hydroxy, $C_1$-$C_4$-Alkoxy, Phenoxy, $C_2$-$C_5$-Alkanoyloxy, das gegebenenfalls durch $C_1$-$C_4$-Alkoxy oder Phenoxy substituiert ist, oder durch Carbo-$C_1$-$C_4$-Alkoxy substituiertes $C_1$-$C_4$-Alkyl; Allyl oder Phenyl-$C_1$-$C_4$-Alkyl; oder die Gruppe 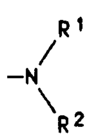 stellt einen gesättigten oder partiell ungesättigten heterocyclischen Fünf- oder Sechsring dar, der gegebenenfalls noch ein Sauerstoff- oder ein weiteres Stickstoffatom als Ringglied enthalten kann; |
| Y | Wasserstoff, Hydroxy, Methyl, Ethyl; |
| Y | 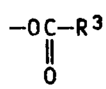 worin $R^3$ für lineares oder verzweigtes $C_1$-$C_{12}$-Alkyl,Phenyl oder durch $C_1$-$C_4$-Alkyl oder $C_1$-$C_4$-Alkoxy substituiertes Phenyl steht; |
| Y | |

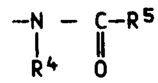

worin $R^4$ für Wasserstoff oder $C_1$-$C_4$-Alkyl steht und $R^5$ die folgende Bedeutung hat: Wasserstoff, lineares oder verzweigtes $C_1$-$C_{12}$-Alkyl, Trifluormethyl, Chlormethyl, $C_1$-$C_4$-Alkoxymethyl, Phenoxymethyl, wobei im Phenoxy gegebenenfalls 1 oder 2 Wasserstoffatome durch Chlor, Methoxy, Nitro oder $C_1$-$C_4$-Alkyl substituiert sind und bei zwei Substituenten diese gleich oder verschieden sein können; Phenylthiomethyl, worin das Phenyl gegebenenfalls durch $C_1$-$C_4$-Alkyl substituiert ist; Benzyl; Phenylethyl; $C_3$-$C_7$-Cycloalkyl; Phenyl, durch $C_1$-$C_{12}$-Alkyl, $C_1$-$C_{12}$-Alkoxy oder Nitro substituiertes Phenyl; $H_5C_6$-CH=CH-; oder -$CH_2$-PO($OR^6$)$_2$, worin $R^6$ für $C_1$-$C_4$-Alkyl steht; oder

Y

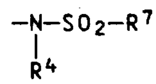

worin $R^4$ die vorstehend genannte Bedeutung hat und $R^7$ für $C_1$-$C_{12}$-Alkyl, Phenyl oder $C_1$-$C_{12}$-Alkylphenyl steht; oder

Y N-$C_1$-$C_4$-Alkylamino, wenn $R^1$ und $R^2$ $C_1$-$C_4$-Alkyl sind; oder

Y N,N-Di-$C_1$-$C_4$-Alkylamino, N-Pyrrolidinyl, N-Piperidinyl oder N-Morpholinyl, wenn

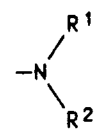

die gleiche Bedeutung hat; und

Z Wasserstoff oder für den Fall, daß $R^1$ und $R^2$ $C_1$-$C_4$-Alkyl, Allyl und Y

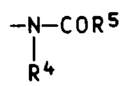

sind, auch Methoxy oder Ethoxy.

**2.** Mehrschichtiges, elektrophotographisches Aufzeichnungsmaterial nach Anspruch 1, dadurch gekennzeichnet, daß man hierin als Sensibilisatoren ($b_2$) Isoindoleninfarbstoffe der allgemeinen Formel Ia verwendet,

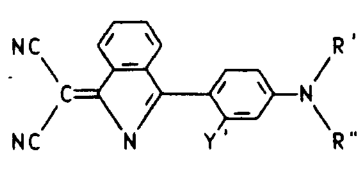

(Ia)

worin die Variablen die folgende Bedeutung haben:

Y' Wasserstoff, Hydroxy, Methyl,

Y'

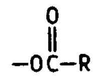

-NHCOR[8] oder -$NHSO_2$-R[9] ,
worin

R — $C_1$-$C_6$-Alkyl oder Phenyl,

R[8] — lineares oder verzweigtes $C_1$-$C_{12}$-Alkyl, Methoxymethyl, gegebenenfalls im Phenoxy durch Methoxy oder $C_1$-$C_4$-Alkyl substituiertes Phenoxymethyl, gegebenenfalls im Phenyl durch $C_1$-$C_4$-Alkyl substituiertes Phenylthiomethyl, Benzyl, Phenylethyl, Phenyl, $C_1$-$C_{12}$-Alkylphenyl, $C_6H_5$-CH = CH-, $C_3$-$C_7$-Cycloalkyl, $C_1$-$C_4$-Alkoxyphenyl, -$CH_2$-PO-$(OCH_3)_2$, -$CH_2$-PO$(OC_2H_5)_2$, -$CH_2$-PO$(OC_3H_7)_2$ oder -$CH_2$-PO$(OC_4H_9)_2$; und

R[9] — $C_1$-$C_{12}$-Alkyl, Phenyl oder $C_1$-$C_{12}$-Alkylphenyl;

$R'$ und $R''$ — $C_1$-$C_4$-Alkyl, 2-Hydroxyethyl, $C_1$-$C_4$-Alkoxyethyl, 2-Phenoxyethyl, 2-Chlorethyl, 2-Cyanethyl, 2-(Carbomethoxy)-ethyl, 2-(Carboethoxy)-ethyl, 2-(Ethanoyloxy)-ethyl, 2-(Propanoyloxy)-ethyl, Allyl, Benzyl, wobei die Substituenten $R'$ und $R''$ gleich oder verschieden sein können; oder

$R'$ — Wasserstoff oder Methyl und

$R''$ — Phenyl, durch Methyl, Ethyl, Methoxy oder Ethoxy substituiertes Phenyl oder Cyclohexyl;

oder die Gruppe

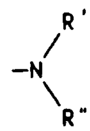

ist N-Pyrrolidinyl, N-Piperidinyl, Pyrazolidin-1-yl, $\Delta^2$-3-Methyl-pyrazolin-1-yl, $\Delta^2$-3,5,5-Trimethylpyrazolin-1-yl, $\Delta^2$-3-Methyl-5-phenyl-pyrazolin-1-yl, $\Delta^3$-3,5-Diphenylpyrazolin-1-yl, N-Imidazolyl oder N-Morpholinyl.

**3.** Mehrschichtiges, elektrophotographisches Aufzeichnungsmaterial nach Anspruch 2, dadurch gekennzeichnet, daß man hierin als Sensibilisatoren ($b_2$) Isoindoleninfarbstoffe Ia der allgemeinen Formel Ia verwendet, worin der Rest

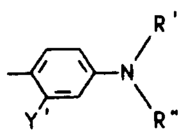

für einen Rest der Formeln

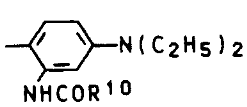

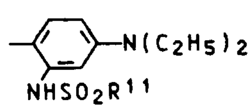

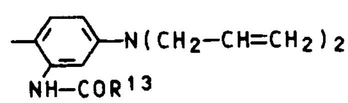

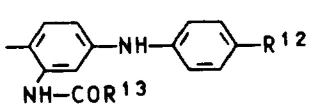

oder

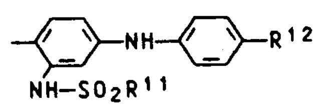

steht, worin die Variablen die folgende Bedeutung haben:

R[10] — lineares oder verzweigtes $C_1$-$C_{12}$-Alkyl, Methoxymethyl, Phenoxymethyl, das im Phenoxy gegebenenfalls durch Methoxy oder $C_1$-$C_4$-Alkyl substituiert ist, $C_3$-$C_7$-Cycloalkyl, Phenyl,

durch $C_1$-$C_4$-Alkoxy oder $C_1$-$C_4$-Alkyl substituiertes Phenyl, Benzyl, Phenylethyl oder $C_6H_5$-$CH=CH$-;

$R^{11}$ $C_1$-$C_{12}$-Alkyl, Phenyl oder $C_1$-$C_{12}$-Alkylphenyl;

$R^{12}$ Wasserstoff, Methyl, Ethyl, Methoxy oder Ethoxy; und

$R^{13}$ $C_1$-$C_6$-Alkyl.

**4.** Mehrschichtiges, elektrophotographisches Aufzeichnungsmaterial nach Anspruch 2, dadurch gekennzeichnet, daß in der allgemeinen Formel Ia $R'$ und $R''$ Ethyl und $Y'$ -NHCOR$^{14}$ oder -NH-$SO_2R^{15}$ bedeuten, worin $R^{14}$ für $C_1$-$C_{12}$-Alkyl oder Phenoxymethyl und $R^{15}$ für Methyl oder Ethyl steht.

**5.** Mehrschichtiges, elektrophotographisches Aufzeichnungsmaterial nach Anspruch 4, dadurch gekennzeichnet, daß $R'$ und $R''$ Ethyl und $Y'$ -NH-COR$^{14}$ bedeuten, worin $R^{14}$ für Methyl oder Ethyl steht.

**6.** Mehrschichtiges, elektrophotographisches Aufzeichnungsmaterial nach Anspruch 2, dadurch gekennzeichnet, daß in der allgemeinen Formel Ia $R'$ und $R''$ Ethyl und $Y'$

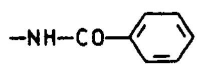 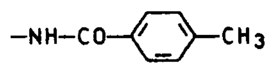

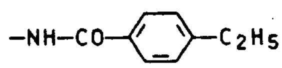 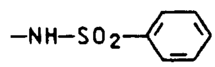

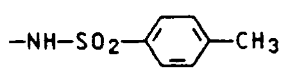 oder 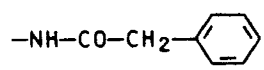

bedeuten.

**7.** Mehrschichtiges, elektrophotographisches Aufzeichnungsmaterial nach Anspruch 2, dadurch gekennzeichnet, daß in der allgemeinen Formel Ia $Y'$ für Wasserstoff und

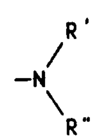

für $\Delta^3$-3-Methyl-pyrazolin-1-yl, $\Delta^2$-3,5,5-Trimethylpyrazolin-1-yl, $\Delta^2$-3-Methyl-5-phenylpyrazolin-1-yl oder $\Delta^3$-3,5-Diphenylpyrazolin-1-yl steht.

**8.** Mehrschichtiges, elektrophotographisches Aufzeichnungsmaterial nach einem der Ansprüche 1 bis 7, dadurch gekennzeichnet, daß die Schicht (B) als Doppelschicht ausgelegt ist, welche eine Isoindoleninfarbstoffe I und/oder Ia enthaltende Sensibilisatorschicht ($b_2$) und eine Schicht aus Bindemitteln ($b_1$), Photoleitern ($b_3$) und gegebenenfalls Zusatzstoffen ($b_4$) aufweist.

**9.** Mehrschichtiges, elektrophotographisches Aufzeichnungsmaterial nach Anspruch 8, dadurch gekennzeichnet, daß die Sensibilisatorschicht (b2) aus Isoindoleninfarbstoffen I und/oder Ia besteht.

**10.** Mehrschichtiges, elektrophotographisches Aufzeichnungsmaterial nach einem der Ansprüche 1 bis 7, dadurch gekennzeichnet, daß sich hierin zwischen dem Träger (A) und der photoleitenden Schicht (B) eine weitere Sensibilisatorschicht aus einem an sich bekannten Pigment befindet.

**11.** Mehrschichtiges, elektrophotographisches Aufzeichnungsmaterial nach einem der Ansprüche 1 bis 10, dadurch gekennzeichnet, daß sich hierin auf den Träger (A) eine weitere photoleitende Schicht aus einem an sich bekannten Photoleiter ($b_3$) befindet.

**12.** Mehrschichtiges, elektrophotographisches Aufzeichnungsmaterial nach einem der Ansprüche 1 bis 11 zur Herstellung elektrophotographischer Druckplatten, dadurch gekennzeichnet, daß es einen für Druckplatten geeigneten Träger (A) einer Dicke von 80 $\mu$m bis 0,6 mm und mindestens eine photoleitende Schicht (B) enthält.

**13.** Mehrschichtiges, elektrophotographisches Aufzeichnungsmaterial nach Anspruch 12, dadurch gekennzeichnet, daß das Bindemittel ($b_1$) in wäßrig-alkalischen oder wäßrig-alkoholischen Entwicklerlösungsmitteln löslich ist.

**14.** Mehrschichtiges, elektrophotographisches Aufzeichnungsmaterial nach Anspruch 12 oder 13, dadurch gekennzeichnet, daß das Bindemittel ($b_1$) ein Copolymerisat aus Styrol, Maleinsäureanhydrid und Acrylsäure und/oder Methacrylsäure ist, welches, bezogen auf seine Gesamtmenge, 5 bis 50 Gew.% Maleinsäureanhydrid und 5 bis 35 Gew.% Acrylsäure und/oder Methacrylsäure einpolymerisiert enthält.

**15.** Verfahren zur Herstellung elektrophotographischer Offsetdruckplatten durch

1. elektrisch positives oder elektrisch negatives elektrostatisches Aufladen eines mehrschichtigen, elektrophotographischen Aufzeichnungsmaterialien mittels einer Hochspannungscorona,
2. bildmäßiges Belichten des elektrisch negativ oder elektrisch positiv aufgeladenen, mehrschichtigen, elektrophotographischen Aufzeichnungsmaterials mit aktinischem Licht, wodurch ein latentes elektrostatisches Bild erzeugt wird,
3. Entwickeln des latenten elektrostatischen Bildes mittels fester oder flüssiger Toner,
4. Fixieren des Tonerbildes durch Erhitzen und
5. Wegwaschen der unbetonerten Nichtbildbereiche der photoleitenden Schicht des elektrophotographischen Aufzeichnungsmaterials mit Entwicklerlösungsmitteln, wodurch die hydrophile Oberfläche des Trägers (A) freigelegt wird,

dadurch gekennzeichnet, daß man hierzu ein mehrschichtiges, photographisches Aufzeichnungsmaterial nach einem der Ansprüche 12, 13 oder 14 verwendet.

**16.** Isoindoleninfarbstoffe der allgemeinen Formel Ia,

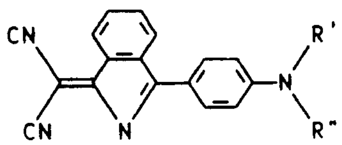

Ia

worin die Gruppe

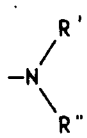

einen partiell ungesättigten heterocyclischen Fünf- oder Sechsring darstellt.

**17.** Isoindoleninfarbstoffe Ia nach Anspruch 16, dadurch gekennzeichnet, daß

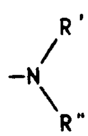

einen partiell ungesättigten heterocyclischen Fünf- oder Sechsring darstellt, welcher noch ein Sauerstoffatom oder ein weiteres Stickstoffatom als Ringglied enthält.

**18.** Isoindoleninfarbstoffe Ia nach Anspruch 17, dadurch gekennzeichnet, daß die Gruppe

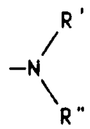

ein substituierter oder unsubstituierter $\Delta^2$-Pyrazolin-1-yl-Rest ist.

**19.** Isoindoleninfarbstoffe Ia nach Anspruch 17, dadurch gekennzeichnet, daß die Gruppe

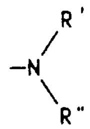

ein substituierter oder unsubstituierter Imidazol-1-yl-Rest ist.

**Claims**

**1.** A multilayered electrophotographic recording element comprising
(A) an electrically conducting base and
(B) one or more layers comprising
($b_1$) one or more binders,
($b_2$) one or more charge carrier generators or sensitizers,
($b_3$) one or more charge carrier transporters or photoconductors and optionally
($b_4$) additives,
wherein the charge carrier generators or sensitizers ($b_2$) are isoindolenine dyes of the general formula I

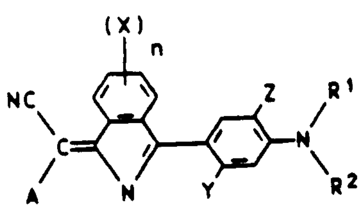

where the index and the variables are each defined as follows:

| | |
|---|---|
| A | is cyano, carbo-$C_1$-$C_4$-alkoxy, carbamoyl, N-$C_1$-$C_4$-alkylcarbamoyl, where the alkyl is unsubstituted or substituted by $C_1$-$C_4$-alkoxy, N-phenylcarbamoyl, where the phenyl is unsubstituted or substituted by $C_1$-$C_4$-alkyl or $C_1$-$C_4$-alkoxy, or acetyl, benzoyl, 4-nitrophenyl or 4-cyanophenyl, |
| X | is hydrogen, chlorine, $C_1$-$C_4$-alkyl or $C_1$-$C_4$-alkoxy, it being possible when n = 2 for the substituents to be identical or different, |
| n | is 1 or 2, |
| $R^1$ | is hydrogen, methyl, ethyl or 2-hydroxyethyl and |
| $R^2$ | is phenyl, $C_1$-$C_4$-alkyl- or $C_1$-$C_4$-alkoxy-substituted phenyl or cyclohexyl, or |
| $R^1$ | is hydrogen and |
| $R^2$ | is $C_1$-$C_4$-alkyl, or |
| $R^1$ and $R^2$ | are each $C_1$-$C_6$-alkyl, $C_1$-$C_4$-alkyl which is substituted by chlorine, cyano, hydroxyl, $C_1$-$C_4$-alkoxy, phenoxy, $C_2$-$C_5$-alkanoyloxy, which is unsubstituted or substituted by $C_1$-$C_4$-alkoxy or phenoxy, or carbo-$C_1$-$C_4$-alkoxy, or are each allyl or phenyl-$C_1$-$C_4$-alkyl, or the group |

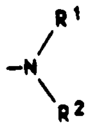

is a saturated or partially unsaturated heterocyclic five-membered or six-membered ring, which may each additionally contain an oxygen atom or a further nitrogen atom as ring member,

Y is hydrogen, hydroxyl, methyl or ethyl,

Y is

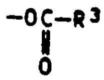

where $R^3$ is linear or branched $C_1$-$C_{12}$-alkyl, phenyl or $C_1$-$C_4$-alkyl- or $C_1$-$C_4$-alkoxy-substituted phenyl,

Y is

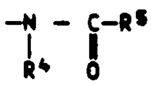

where $R^4$ is hydrogen or $C_1$-$C_4$-alkyl and $R^5$ has the following meanings: hydrogen, linear or branched $C_1$-$C_{12}$-alkyl, trifluoromethyl, chloromethyl, $C_1$-$C_4$-alkoxymethyl, phenoxymethyl, wherein 1 or 2 hydrogen atoms in the phenoxy may be replaced by chlorine, methoxy, nitro or $C_1$-$C_4$-alkyl and if there are two substituents it is possible for these to be identical or different,

phenylthiomethyl, where the phenyl is unsubstituted or substituted by $C_1$-$C_4$-alkyl, benzyl, phenylethyl, $C_3$-$C_7$-cycloalkyl, phenyl, $C_1$-$C_{12}$-alkyl-, $C_1$-$C_{12}$-alkoxy- or nitro-substituted phenyl, $H_5C_6$-CH=CH-, or $-CH_2-PO(OR^6)_2$, where $R^6$ is $C_1$-$C_4$-alkyl, or

Y is

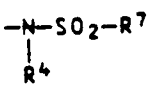

where $R^4$ is as defined above and $R^7$ is $C_1$-$C_{12}$-alkyl, phenyl or $C_1$-$C_{12}$-alkylphenyl, or

Y is N-$C_1$-$C_4$-alkylamino when $R^1$ and $R^2$ are each $C_1$-$C_4$-alkyl, or

Y is N,N-di-$C_1$-$C_4$-alkylamino, N-pyrrolidinyl, N-piperidinyl or N-morpholinyl, when

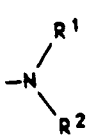

has the same meaning, and

Z is hydrogen or if $R^1$ and $R^2$ are each $C_1$-$C_4$-alkyl or allyl and Y is

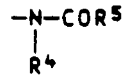

also methoxy or ethoxy.

**2.** The multilayered, electrophotographic recording element as claimed in claim 1, wherein the sensitizers ($b_2$) are isoindolenine dyes of the general formula Ia

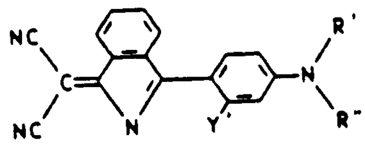

(Ia)

where the variables are each defined as follows:

| | |
|---|---|
| Y' | is hydrogen, hydroxyl, methyl |
| Y' | is |

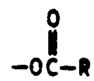

-$NHCOR^8$ or -$NHSO_2$-$R^9$, where

| | |
|---|---|
| R | is $C_1$-$C_6$-alkyl or phenyl, |
| $R^8$ | is linear or branched $C_1$-$C_{12}$-alkyl, methoxymethyl, phenoxymethyl unsubstituted or substituted in the phenoxy by methoxy or $C_1$-$C_4$-alkyl, phenylthiomethyl unsubstituted or substituted in the phenyl by $C_1$-$C_4$-alkyl, benzyl, phenylethyl, phenyl, $C_1$-$C_{12}$-alkylphenyl, $C_6H_5$-$CH=CH$-, $C_3$-$C_7$-cycloalkyl, $C_1$-$C_4$-alkoxyphenyl, -$CH_2$-$PO(OCH_3)_2$, -$CH_2$-$PO(OC_2H_5)_2$, -$CH_2$-$PO(OC_3H_7)_2$ or -$CH_2$-$PO(OC_4H_9)_2$, and |
| $R^9$ | is $C_1$-$C_{12}$-alkyl, phenyl or $C_1$-$C_{12}$-alkylphenyl, |
| R' and R" | are each $C_1$-$C_4$-alkyl, 2-hydroxyethyl, $C_1$-$C_4$-alkoxyethyl, 2-phenoxyethyl, 2-chloroethyl, 2-cyanoethyl, 2-(carbomethoxy)ethyl, 2-(carboethoxy)ethyl, 2-(ethanoyloxy)ethyl, 2-(propanoyloxy)ethyl, allyl or benzyl, the substituents R' and R" being identical or different, or |
| R' | is hydrogen or methyl and |
| R" | is phenyl, methyl-, ethyl-, methoxy- or ethoxy-substituted phenyl or cyclohexyl, or the group |

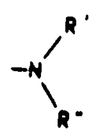

is N-pyrrolidinyl, N-piperidinyl, pyrazolidin-1-yl, $\Delta^2$-3-methylpyrazolin-1-yl, $\Delta^2$-3,5,5-trimethylpyrazolin-1-yl, $\Delta^2$-3-methyl-5-phenylpyrazolin-1-yl, $\Delta^3$-3,5-diphenyl-pyrazolin-1-yl, N-imidazolyl or N-morpholinyl.

**3.** The multilayered, electrophotographic recording element as claimed in claim 2, wherein the sensitizers ($b_2$) are isoindolenine dyes Ia of the general formula Ia where the radical

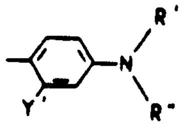

is a radical of the formula

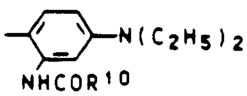
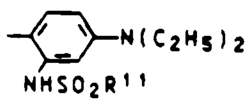
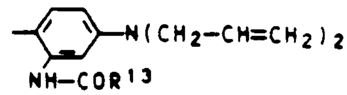
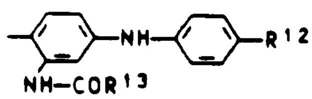

or

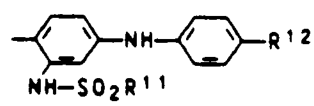

where the variables are defined as follows:

- $R^{10}$ is linear or branched $C_1$-$C_{12}$-alkyl, methoxymethyl, phenoxymethyl which is unsubstituted or substituted in the phenoxy by methoxy or $C_1$-$C_4$-alkyl, $C_3$-$C_7$-cycloalkyl, phenyl, $C_1$-$C_4$-alkoxy- or $C_1$-$C_4$-alkyl-substituted phenyl, benzyl, phenylethyl or $C_6H_5$-CH = CH-,
- $R^{11}$ is $C_1$-$C_{12}$-alkyl, phenyl or $C_1$-$C_{12}$-alkylphenyl,
- $R^{12}$ is hydrogen, methyl, ethyl, methoxy or ethoxy and
- $R^{13}$ is $C_1$-$C_6$-alkyl.

**4.** The multilayered, electrophotographic recording element as claimed in claim 2, wherein in the general formula Ia R' and R" are each ethyl and Y' is -$NHCOR^{14}$ or -NH-$SO_2R^{15}$ where $R^{14}$ is $C_1$-$C_{12}$-alkyl or phenoxymethyl and $R^{15}$ is methyl or ethyl.

**5.** The multilayered, electrophotographic recording element as claimed in claim 4, wherein R' and R" are each ethyl and Y' is -NH-$COR^{14}$ where $R^{14}$ is methyl or ethyl.

**6.** The multilayered, electrophotographic recording element as claimed in claim 2, wherein in the general formula Ia R' and R" are each ethyl and Y' is

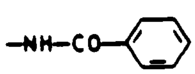
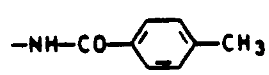
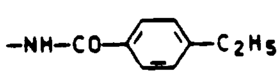
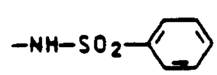
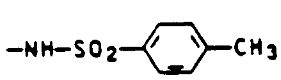

or

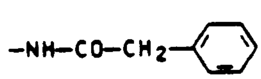

**7.** The multilayered, electrophotographic recording element as claimed in claim 2, wherein in the general formula Ia Y' is hydrogen and

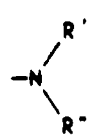

is $\Delta^3$-3-methylpyrazolin-1-yl, $\Delta^2$-3,5,5-trimethylpyrazolin-1-yl, $\Delta^2$-3-methyl-5-phenylpyrazolin-1-yl or $\Delta^3$-3,5-diphenylpyrazolin-1-yl.

**8.** The multilayered, electrophotographic recording element as claimed in any of claims 1 to 7, wherein the layer (B) is designed as a double layer comprising an isoindolenine dye I- or Ia- containing sensitizer layer ($b_2$) and a layer comprising binders, ($b_1$), photoconductors ($b_3$) and optionally additives ($b_4$).

**9.** The multilayered, electrophotographic recording element as claimed in claim 8, wherein the sensitizer layer (b2) consists of isoindolenine dyes I or Ia.

**10.** The multilayered, electrophotographic recording element as claimed in any of claims 1 to 7, wherein a further sensitizer layer of a pigment known per se is situated therein between the base (A) and the photoconductive layer (B).

**11.** The multilayered, electrophotographic recording element as claimed in any of claims 1 to 10, wherein a further photoconductive layer of a photoconductor ($b_3$) known per se is situated therein on the base (A).

**12.** The multilayered, electrophotographic recording element as claimed in any of claims 1 to 11 for producing electrophotographic printing plates comprising a base (A) from 80 $\mu$m to 0.6 mm in thickness suitable for printing plates and at least one photoconductive layer (B).

**13.** The multilayered, electrophotographic recording element as claimed in claim 12, wherein the binder ($b_1$) is soluble in aqueous alkaline or aqueous alcoholic developers.

**14.** The multilayered, electrophotographic recording element as claimed in claim 2 or 13, wherein the binder ($b_1$) is a copolymer of styrene, maleic anhydride and acrylic acid or methacrylic acid, which contains in copolymerized form and based on its total amount from 5 to 50% by weight of maleic anhydride and from 5 to 35% by weight of acrylic acid and/or methacrylic acid.

**15.** A process for preparing an electrophotographic offset printing plate by

1. charging a multilayered, electrophotographic recording element with an electrically positive or electrically negative electrostatic charge by means of a high-voltage corona,
2. subjecting the electrically negatively or electrically positively charged multilayered, electrophotographic recording element to imagewise exposure with actinic light to produce a latent electrostatic image,
3. developing the latent electrostatic image by means of a solid or liquid toner,
4. fixing the tonered image by heating and
5. washing away the untonered nonimage areas of the photoconductive layer of the electrophotographic recording element with a developer solvent to bare the hydrophilic surface of the base (A),

which comprises using for this purpose a multilayered, photographic recording element as claimed in any of claims 12, 13 and 14.

**16.** An isoindolenine dye of the general formula Ia

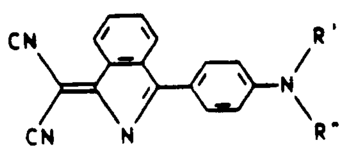

Ia

where the group

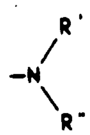

is a partially unsaturated heterocyclic five- or six-membered ring.

**17.** An isoindolenine dye Ia as claimed in claim 16, wherein

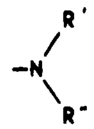

is a partially unsaturated heterocyclic five- or six-membered ring which additionally contains an oxygen atom or a further nitrogen atom as a ring member.

**18.** An isoindolenine dye Ia as claimed in claim 17, wherein the group

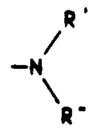

is a substituted or unsubstituted $\Delta^2$-pyrazolin-1-yl radical.

**19.** An isoindolenine dye as claimed in claim 17, wherein the group

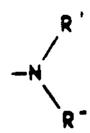

is substituted or unsubstituted imidazol-1-yl.

**Revendications**

**1.** Matériau d'enregistrement électrophotographique à couche multiple comprenant :
(A) un support conducteur de l'électricité et
(B) une ou plusieurs couches consistant en
(b1) un ou plusieurs liants,
(b2) un ou plusieurs composés produisant des porteurs de charge ou sensibilisants
(b3) un ou plusieurs composés transportant les porteurs de charge ou photoconducteurs et le cas échéant
(b4) des additifs,
caractérisé en ce que l'on utilise, en tant que composés produisant des porteurs de charge ou sensibilisants (b2), des colorants d'isoindolénines de formule générale I

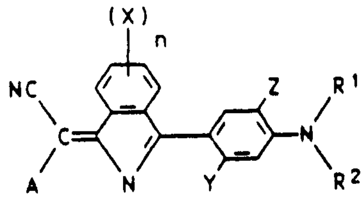

dans laquelle l'indice et les symboles ont les significations suivantes :
A représente un groupe cyano, carbo-alcoxy en C1-C4, carbamoyle, N-(alkyle en C1-C4)-carbamoyle dans lequel le groupe alkyle est éventuellement substitué par un groupe alcoxy en C1-C4, N-phénylcarbamoyle dans lequel le groupe phényle est éventuellement substitué par un groupe alkyle en

C1-C4 ou alcoxy en C1-C4, acétyle, benzoyle, 4-nitrophényle ou 4-cyanophényle ;
X représente l'oxygène, le chlore, un groupe alkyle en C1-C4, alcoxy en C1-C4, les substituants X pouvant être identiques ou différents lorsque n = 2 ;
n est égal à 1 ou 2 ;
$R^1$ représente l'hydrogène, un groupe méthyle, éthyle ou 2-hydroxyéthyle et
$R^2$ représente un groupe phényle, phényle substitué par un groupe alkyle en C1-C4 ou alcoxy en C1-C4, ou cyclohexyle ; ou bien
$R^1$ représente l'hydrogène et
$R^2$ représente un groupe alkyle en C1-C4 ; ou bien
$R^1$ et $R^2$ représentent des groupes alkyle en C1-C6 ; des groues alkyle en C1-C4 substitués par le chlore, des groupes cyano, hydroxy, alcoxy en C1-C4, phénoxy, alcanoyloxy en C2-C5 lui-même éventuellement substitué par un groupe alcoxy en C1-C4 ou phénoxy, ou bien un groupe carbo-alcoxy en C1-C4 ; des groupes allyle ou phényl-alkyle en C1-C4 ;
ou bien le groupe

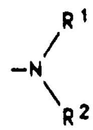

est un groupe hétérocyclique saturé ou partiellement insaturé à 5 ou 6 chaînons qui peut contenir encore le cas échéant un atome d'oxygène ou un autre atome d'azote en tant que chaînon cyclique :
Y représente l'hydrogène, un groupe hydroxy, méthyle, éthyle ;
Y représente

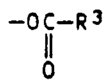

dans lequel $R^3$ représente un groupe alkyle linéaire ou ramifié en C1-C12, phényle ou phényle substitué par un groupe alkyle en C1-C4 ou alcoxy en C1-C4 ;
Y représente

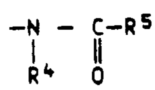

dans lequel $R^4$ représente l'hydrogène ou un groupe alkyle en C1-C4 et $R^5$ a l'une des significations suivantes : l'hydrogène, un groupe alkyle linéaire ou ramifié en C1-C12, un groupe trifluorométhyle, chlorométhyle, (alcoxy en C1-C4)-méthyle, phénoxyméthyle, un ou deux atomes d'hydrogène de la partie phénoxy pouvant le cas échéant être remplacés par le chlore, des groupes méthoxy, nitro ou alkyle en C1-C4, les deux substituants pouvant être identiques ou différents lorsque deux atomes d'hydrogène ont été remplacés ; un groupe phénylthiométhyle dans lequel la partie phényle est éventuellement substituée par un groupe alkyle en C1-C4 ; un groupe benzyle ; un groupe phényléthyle ; un groupe cycloalkyle en C3-C7 ; un groupe phényle, un groupe phényle substitué par un groupe alkyle en C1-C12, alcoxy en C1-C12 ou nitro ; un groupe $H_5C_6-CH=CH-$ ; ou bien un groupe $-CH_2-PO(OR^6)_2$ dans lequel $R^6$ représente un groupe alkyle en C1-C4 ; ou bien
Y représente

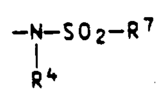

dans lequel $R^4$ a les significations indiquées ci-dessus et $R^7$ représente un groupe alkyle en C1-C12, phényle ou (alkyle en C1-C12)-phényle ; ou bien

Y représente un groupe N-(alkyle en C1-C4)-amino lorsque $R^1$ et $R^2$ représentent des groupes alkyle en C1-C4 ; ou bien
Y représente un groupe N,N-di-(alkyle en C1-C4)-amino, N-pyrrolidinyle, N-pipéridinyle ou N-morpholinyle, lorsque

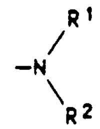

a la même signification ; et
Z représente l'hydrogène, ou bien encore, lorsque $R^1$ et $R^2$ représentent des groupes alkyle en C1-C4 ou allyle et que Y représente

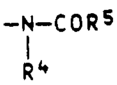

un groupe méthoxy ou éthoxy.

**2.** Matériau d'enregistrement électrophotographique à couche multiple selon la revendication 1, caractérisé en ce que l'on utilise en tant que sensibilisant (b2) des colorants d'isoindolénines de formule générale Ia

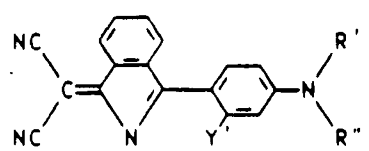

(Ia)

dans laquelle les symboles ont les significations suivantes :
Y' représente l'hydrogène, un groupe hydroxy, méthyle,
Y' représente

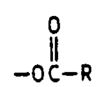

$-NHCOR^8$ ou $-NHSO_2-R^9$ ,
dans lesquels
R représente un groupe alkyle en C1-C6 ou phényle,
$R^8$ représente un groupe alkyle linéaire ou ramifié en C1-C12, un groupe méthoxyméthyle, un groupe phénoxyméthyle éventuellement substitué dans la partie phénoxy par un groupe méthoxy ou alkyle en C1-C4, un groupe phénylthiométhyle éventuellement substitué dans la partie phényle par un groupe en C1-C4, un groupe benzyle, phényléthyle, phényle, (alkyle en C1-C12)-phényle, $C_6H_5-CH=CH$), cycloalkyle en C3-C7, (alcoxy en C1-C4)-phényle, $-CH_2-PO(OCH_3)_2$, $-CH_2-PO(OC_2H_5)_2$, $-CH_2-PO(OC_3H_7)_2$ ou $-CH_2-PO(OC_4H_9)_2$ ; et
$R^9$ représente un groupe alkyle en C1-C12, phényle ou (alkyle en C1-C12)-phényle ;
R' et R" représentent des groupes alkyle en C1-C4, 2-hydroxyéthyle, (alcoxy en C1-C4)-éthyle, 2-phénoxyéthyle, 2-chloréthyle, 2-cyanéthyle, 2-(carbométhoxy)-éthyle, 2-(carboéthoxy)-éthyle, 2-(éthanoyloxy)-éthyle, 2-(propanoyloxy)-éthyle, allyle, benzyle, les substituants R' et R" pouvant être identiques ou différents ; ou bien
R' représente l'hydrogène ou un groupe méthyle et
R" représente un groupe phényle, un groupe phényle substitué par un groupe méthyle, éthyle, méthoxy ou éthoxy, ou un groupe cyclohexyle ;

ou bien le groupe

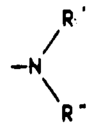

est un groupe N-pyrrolidinyle, N-pipéridinyle, pyrazolidine-1-yle, delta$^2$-3-méthyl-pyrazoline-1-yle, delta$^2$-3,5,5-triméthylpyrazoline-1-yle, delta$^2$-méthyl-5-phényl-pyrazoline-1-yle, delta$^3$-3,5-diphényl-pyrazoline-1-yle, N-imidazolyle ou N-morpholinyle.

**3.** Matériau d'enregistrement électrophotographique à couche multiple selon la revendication 2, caractérisé en ce que l'on utilise en tant que sensibilisants (b2) des colorants d'isoindolénines de formule générale Ia dans laquelle le groupe

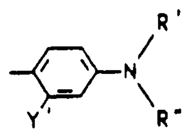

est un groupe de formule

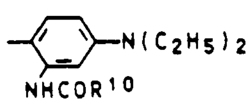 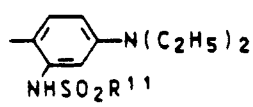 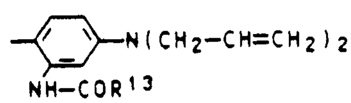

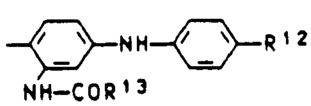 ou 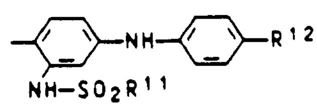

dans lesquelles les symboles ont les significations suivantes :
$R^{10}$ représente un groupe alkyle linéaire ou ramifié en C1-C12, méthoxyméthyle, phénoxyméthyle éventuellement substitué dans la partie phénoxy par un groupe méthoxy ou alkyle en C1-C4, cycloalkyle en C3-C7, phényle, phényle substitué par un groupe alcoxy en C1-C4 ou alkyle en C1-C4, benzyle, phényléthyle ou $C_6H_5$-CH = CH- ;
$R^{11}$ représente un groupe alkyle en C1-C12, phényle ou (alkyle en C1-C12)-phényle ;
$R^{12}$ représente l'hydrogène, un groupe méthyle, éthyle, méthoxy ou éthoxy ; et
$R^{13}$ représente un groupe alkyle en C1-C6.

**4.** Matériau d'enregistrement électrophotographique à couche multiple selon la revendication 2, caractérisé en ce que, dans la formule générale Ia, R' et R" représentent des groupes éthyle et Y' un groupe -NHCOR$^{14}$ ou -NH-SO$_2$R$^{15}$ dans lesquels $R^{14}$ représente un groupe alkyle en C1-C12 ou phénoxyméthyle et $R^{15}$ un groupe méthyle ou éthyle.

**5.** Matériau d'enregistrement électrophotographique à couche multiple selon la revendication 4, caractérisé en ce que R' et R" représentent des groupes éthyle et Y' un groupe -NC-COR$^{14}$ dans lequel $R^{14}$ représente un groupe méthyle ou éthyle.

**6.** Matériau d'enregistrement électrophotographique à couche multiple selon la revendication 2, caractérisé en ce que, dans la formule générale Ia, R' et R" représentent des groupes éthyle et Y' représente

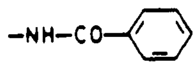
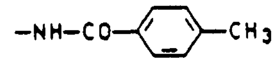

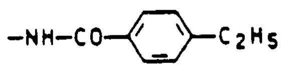
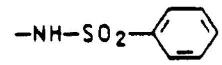

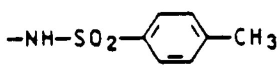
ou
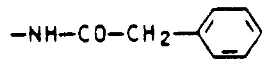

**7.** Matériau d'enregistrement électrophotographique à couche multiple selon la revendication 2, caractérisé en ce que, dans la formule générale Ia, Y' représente l'hydrogène et

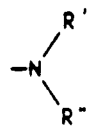

représente un groupe delta$^3$-3-méthyl-pyrazoline-1-yle, delta$^2$-3,5,5-triméthylpyrazoline-1-yle, delta$^2$-3-méthyl-5-phénylpyrazoline-1-yle ou delta$^3$-3,5-diphénylpyrazoline-1-yle.

**8.** Matériau d'enregistrement électrophotographique à couche multiple selon l'une des revendications 1 à 7, caractérisé en ce que la couche (B) consiste en fait en une couche double, à savoir une couche de sensibilisant (b2) contenant des colorants d'isoindolénines I et/ou Ia et une couche consistant en liants (b1), photoconducteurs (b3) et le cas échéant additifs (b4).

**9.** Matériau d'enregistrement électrophotographique à couche multiple selon la revendication 8, caractérisé en ce que la couche de sensibilisants (b2) consiste en colorants d'isoindolénines I et/ou Ia.

**10.** Matériau d'enregistrement électrophotographique à couche multiple selon une des revendications 1 à 7, caractérisé en ce que, entre le support (A) et la couche photoconductrice (B), il y a une autre couche de sensibilisant consistant en un pigment connu en soi.

**11.** Matériau d'enregistrement électrophotographique à couche multiple selon une des revendications 1 à 10, caractérisé en ce que, sur le support (A), il y a une autre couche photoconductrice consistant en un photoconducteur (b3) connu en soi.

**12.** Matériau d'enregistrement électrophotographique à couche multiple selon une des revendications 1 à 11, pour la fabrication de plaques d'impression électrophotographiques, caractérisé en ce qu'il contient un support (A) approprié pour plaques d'impression, d'une épaisseur de 80 µm à 0,6 mm, et au moins une couche photoconductrice (B).

**13.** Matériau d'enregistrement électrophotographique à couche multiple selon la revendication 12, caractérisé en ce que le liant (b1) est soluble dans des solvants révélateurs aqueux alcalins ou hydroalcooliques.

**14.** Matériau d'enregistrement électrophotographique à couche multiple selon les revendications 12 ou 13, caractérisé en ce que le liant (b1) est un copolymère du styrène, de l'anhydride maléique et de l'acide acrylique et/ou méthacrylique qui contient, sur son poids total et à l'état polymérisé, de 5 à 50 % en poids d'anhydride maléique et de 5 à 35 % en poids d'acide acrylique et/ou méthacrylique.

**15.** Procédé pour la fabrication de plaques électrophotographiques d'impression en offset par

1. charge électrostatique positive ou négative d'un matériau d'enregistrement électrophotographique à couche multiple par une décharge corona à haute tension ;

2. exposition du matériau d'enregistrement électrophotographique à couche multiple à charge électrique négative ou positive à la lumière actinique avec formation d'une image, d'où production d'une image électrostatique latente ;
3. développement de l'image électrostatique latente à l'aide de toners solides ou liquides ;
4. fixation de l'image de toner par chauffage et
5. élimination par lavage des régions non-images et non-colorées de la couche photoconductrice du matériau d'enregistrement électrophotographique à l'aide de solvants révélateurs, dénudant la surface hydrophile du support (A).

caractérisé en ce que l'on utilise à cet effet un matériau d'enregistrement photographique à couche multiple selon une des revendications 12, 13 ou 14.

**16.** Colorants d'isoindolénines de formule générale Ia

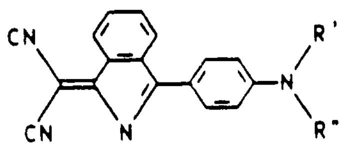

Ia

dans laquelle le groupe

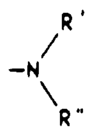

est un groupe hétérocyclique partiellement insaturé à 5 ou 6 chaînons.

**17.** Colorants d'isoindolénines Ia selon la revendication 16, caractérisés en ce que

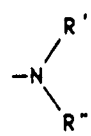

est un groupe hétérocyclique partiellement insaturé à 5 ou 6 chaînons contenant encore un atome d'oxygène ou un autre atome d'azote en tant que chaînon cyclique.

**18.** Colorants d'isoindolénines Ia selon la revendication 17, caractérisés en ce que le groupe

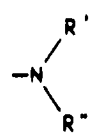

est un groupe delta$^2$-pyrazoline-1-yle substitué ou non.

**19.** Colorants d'isoindolénines Ia selon la revendication 17, caractérisés en ce que le groupe

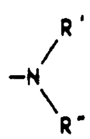

est un groupe imidazole-1-yle substitué ou non.